# EUROPÄISCHE PATENTSCHRIFT

(11) **EP 2 035 303 B1**
(45) Veröffentlichungstag und Bekanntmachung des Hinweises auf die Patenterteilung: **04.12.2013**
(21) Anmeldenummer: 07764699.0
(22) Anmeldetag: 18.06.2007
(51) Int. Cl.: B08B 9/32, B08B 9/42, B65G 29/00

(54) **VERFAHREN ZUM BEHANDELN VON BEHÄLTERN SOWIE BEHÄLTERBEHANDLUNGSMASCHINE**
METHOD FOR HANDLING CONTAINERS AND CONTAINER HANDLING MACHINE
PROCEDE ET MACHINE DE TRAITEMENT DE RECIPIENTS

(30) Priorität: 20.06.2006 DE 102006028266
(43) Veröffentlichungstag der Anmeldung: 18.03.2009
(73) Patentinhaber: KHS GmbH, 44143 Dortmund (DE)
(72) Erfinder: TILL, Volker, 65719 Hofheim am Taunus (DE)
(86) Internationale Anmeldenummer: PCT/EP2007/005342
(87) Internationale Veröffentlichungsnummer: WO 2007/147543

(56) Entgegenhaltungen:
- US-A- 1 456 690
- US-A- 5 509 524

## Beschreibung

Die Erfindung bezieht sich auf ein Verfahren gemäß Oberbegriff Patentanspruch 1 oder 7 sowie auf eine Behälterbehandlungsmaschine gemäß Oberbegriff Patentanspruch 24 oder 30.

Unter "Behälter" sind im Sinne der Erfindung insbesondere Flaschen, Dosen, Tuben sowie andere Behälter zu verstehen, die als Verpackungsmittel für Füllgüter unterschiedlichster Art, insbesondere auch für flüssige und/oder pastöse Füllgüter geeignet sind und/oder verwendet werden.

Unter "Behandlung" ist im Sinne der Erfindung das Füllen der Behälter bei Ausbildung der Behälterbehandlungsmaschine als Füllmaschine, aber das Reinigen und/oder Sterilisieren der Behälter bei Ausbildung der Behälterbehandlungsmaschine als Rinser und/oder Sterilisator zu verstehen.

Bei der Behandlung derartiger Verpackungsmittel oder Behälter werden insbesondere bei hohen Leistungen Behandlungsmaschinen umlaufender Bauart verwendet, und zwar Maschinen mit einem kontinuierlich oder aber auch getaktete um eine vertikale Maschinenachse umlaufend angetriebenen Rotor, auf dem die Behandlung der Behälter zwischen einem Behältereinlauf und einem Behälterauslauf während der Drehbewegung des Rotors erfolgt. Bei bekannten Behandlungsmaschinen sind hierfür am Umfang des Rotors in gleichmäßigem Winkelabstände um die vertikale Maschinenachse verteilt Behandlungspositionen gebildet, die unter anderem jeweils eine Behälteraufnahme zur Aufnahme eines Behälters sowie weitere, für die Behandlung spezifische Funktionselemente aufweisen. Die Behälter werden der jeweiligen Behandlungsposition bzw. der dortigen Behälteraufnahme an dem beispielsweise von einem Transportstern gebildeten Behältereinlauf zugeführt. Die behandelten Behälter werden den einzelnen Behälteraufnahmen an dem beispielsweise ebenfalls von einem Transportstern gebildeten Behälterauslauf für eine weitere Verwendung oder Behandlung entnommen. Auf einen Winkelbereich der Drehbewegung des Rotors zwischen dem Behältereinlauf und dem Behälterauslauf erfolgt die Behandlung. Aus konstruktiven Gründen sowie ebenfalls bedingt durch den zur Zu- und Abfuhr der Behälter erforderlichen Raum ist dieser Winkelbereich kleiner als 360° und liegt bei bereits optimierten Verhältnissen in der Größenordnung von etwa 330°.

Bei hohen Leistungen, wie sie für Behandlungsmaschinen umlaufender Bauart gefordert werden, führt dieser begrenzte, für die Behandlung zur Verfügung stehende Winkelbereich der Drehbewegung des Rotors zu extrem großen Rotordurchmessern, um bei einer hohen Leistung und damit bei einer hohen Rotordrehzahl eine ausreichende Behandlungszeit zu ermöglichen. So sind bei Füllmaschinen höherer Leistung Rotordurchmesser in der Größenordnung von 7,5 Meter keine Seltenheit.

Um bei reduzierter Rotordrehzahl eine hohe Leistung (hohe Anzahl der behandelten Behälter je Zeiteinheit) zu erreichen, ist eine Behälterbehandlungsmaschine bekannt (WO2006/011896), bei der die Behandlungsstationen auf dem um die vertikale Maschinenachse umlaufend angetriebenen Rotor in mehreren, diese Maschinenachse kreisringförmig umschließenden Spuren mit unterschiedlichem radialen Abstand von der Maschinenachse angeordnet sind. Die Behälter werden der Behandlungsmaschine an dem Behältereinlauf als mehrspuriger Behälterstrom zugeführt, und zwar derart, dass jeder Spur des zugeführten Behälterstromes eine Spur auf den Rotor zugeordnet ist, d.h. die Behälter jeder Spur des zugeführten Behälterstromes auf eine eigene Spur des Rotors bzw. auf die auf dieser Spur umlaufenden Behälteraufnahmen gelangen. In analoger Weise werden die behandelten Behälter von den Spuren des Rotors am Behälterauslauf entnommen und als mehrspuriger Behälter Strom der weiteren Verwendung oder Behandlung zugeführt. Die Behandlung jedes Behälters erfolgt dabei wiederum zwischen dem Behältereinlauf und dem Behälterauslauf auf einem Winkelbereich der Drehbewegung des Rotors, der (Winkelbereich) kleiner ist als 360°. Durch die gleichzeitige Behandlung einer Vielzahl von Behältern auf mehreren Spuren des Rotors ergibt sich zwar gegenüber bekannten Maschinen, bei denen die Behälteraufnahmen bzw. die Behandlungsstationen nur auf einer einzigen Spur am Rotorumfang vorgesehen sind, eine Verbesserung, das mehrspurige Zuführen und Abführen der Behälter bedingt jedoch eine aufwendige und auch störanfällige Konstruktion.

Bekannt ist auch eine Vorrichtung zum Überführen von Behältern, nämlich Tuben, von Haltestiften eines die Behälter anfördemden Transporteurs auf Dorne, die am Umfang einer um eine horizontale Achse umlaufend angetriebenen Scheibe vorgesehen sind und an denen die Behälter gehalten zum Bedrucken der Behälteraußenfläche an der Drucktrommel vorbeibewegt werden, sowie zum Abnehmen der bedruckten Behälter von den Dornen und zum Aufsetzen der Behälter auf Haltestifte eines abfördernden Transporteurs (DE 31 00 792 A1). Die Transporteure sind jeweils mit einer Teillänge bogenförmig um einen Teil der Umfangsfläche der umlaufend angetriebenen Scheibe geführt, um das Abnehmen bzw. das Absetzen der Behälter von dem bzw. auf den jeweiligen Transporteur zu ermöglichen.

Bekannt ist weiterhin eine Füllmaschine zum Füllen von Flaschen mit einem um eine vertikale Maschinenachse getaktet umlaufend angetriebenen Rotor und mit mehreren Standflächen für die zu füllenden Flaschen bildenden Behälteraufnahmen am Umfang des Rotors (US 1 456 690 A). Mehrere Behälteraufnahmen sind jeweils von einer drehtellerartigen Behälteraufnahmeeinheit gebildet, die gesteuert um eine vertikale Achse schwenkbar ist, und zwar derart, dass die auf den Behälteraufnahmen mit ihrem Boden aufstehenden Flaschen auf einer inneren Spur der Drehbewegung des Rotors unter dort vorgesehenen Füllelementen angeordnet gefüllt und die gefüllten Flaschen dann nach einem durch Schwenken der jeweiligen Behälteraufnahmeeinheit erfolgten Spurwechsel auf einer äußeren Spur der Drehbewegung des Rotors zum Verschließen an einer Verschließposition vorbei bewegt werden.

Bekannt sind weiterhin Füllmaschinen umlaufender Bauart (US 5 509 524 A), bei denen die zu füllenden Behälter einem kreisringartigen und um eine vertikale Maschinenachse umlaufend antreibbaren Rotor über einen äußeren Behältereinlauf zugeführt und nach dem Füllen über einen inneren, an der Innenseite des kreisringartigen Rotors vorgesehenen Behälterauslauf vom Rotor abgenommen werden. Das Zuführen der Behälter erfolgt an rotorseitige Behälteraufnahmen, die sich zunächst an jeweils einer radial außenliegenden Position des Rotors befinden und nach der Übergabe des jeweiligen Behälters radial zur Drehachse an eine mittlere Position oder Spur bewegt werden, auf der das Füllen der Behälter bei umlaufenden Rotor erfolgt. Nach dem Füllen eines Behälters wird die zugehörige Behälteraufnahme radial zur vertikalen Drehachse des Rotors an eine innenliegende Position bewegt, aus der der gefüllte Behälter allein oder aber zusammen mit seiner Behälteraufnahme vom Rotor am Behälterauslauf abgenommen wird.

Aufgabe der Erfindung ist es ein Verfahren aufzuzeigen, welches bei reduziertem Rotordurchmesser der verwendeten Behälterbehandlungsmaschine hohe Leistungen ermöglicht, und zwar bei vereinfachter konstruktiver Ausbildung insbesondere auch des Behältereinlaufs sowie des Behälterauslaufs.

Zur Lösung dieser Aufgabe ist ein Verfahren entsprechend dem Patentanspruch 1 oder 7 ausgebildet. Eine Behälterbehandlungsmaschine ist Gegenstand des Patentanspruchs 24 oder 30.

Bei der Erfindung werden die Behälter als einspuriger Behälterstrom dem wenigstens einem Behältereinlauf zugeführt und von diesem an die sich auf der ersten Spur vorbeibewegenden Behälteraufnahmen übergeben. In gleicher Weise werden die Behälter am Behälterauslauf den dort vorbeibewegten Behälteraufnahmen nacheinander nach Art eines einspurigen Behälterstroms entnommen, und zwar bevorzugt wiederum denjenigen Behälteraufnahmen, die sich an dem Behälterauslauf auf der ersten Spur vorbeibewegen. Während der Behandlung erfolgt auf dem umlaufenden Rotor wenigstens ein einmaliger Spurwechsel für jeden Behälter oder für jede Behälteraufnahme mit dem dort vorgesehenen Behälter, so dass jeder Behälter nicht bereits nach einer Drehung des Rotors um einen Winkelbereich von weniger als 360°, beispielsweise von 330° an den Behälterauslauf gelangt, sondern erst nach einer Drehbewegung des Rotors deutlich größer als dieser Winkelbereich, beispielsweise erst nach einer Drehbewegung des Rotors um etwa 330° zuzüglich 360° oder einem Vielfachen von 360°. Hierdurch wird auch bei hoher Leistung der Behandlungsmaschine und daher bei hoher Rotordrehzahl eine ausreichend lange Behandlungszeit ermöglicht, und zwar mit dem Vorteil, dass das bewährte und betriebssichere Zuführen und/oder Abführen der Behälter als einspuriger Behälterstrom beibehalten werden kann.

Weiterbildungen der Erfindung sind Gegenstand der Unteransprüche. Die Erfindung wird im Folgenden anhand der Figuren an einem Ausführungsbeispiel näher erläutert. Es zeigen:
- Fig. 1: in schematischer Darstellung und in Draufsicht eine mehrspurige Behälterbehandlungsmaschine umlaufender Bauart zum Behandeln von Flaschen, Dosen oder dergleichen Behälter;
- Fig. 2: eine der Behälteraufnahmeeinheiten der Behälterbehandlungsmaschine der Figur 1 bei einer Ausbildung der Maschine als Füllmaschine;
- Fig. 3: eine Darstellung wie Figur 2 mit jeder Behälteraufnahmeeinheit zugeordneten und mit dieser bei einem Spurwechsel mitbewegten Füllelementen;
- Fig. 4: eine Behälteraufnahmeeinheit für eine Überkopf-Behandlung von Flaschen entsprechend einer weiteren Ausführungsform;
- Fig. 5 - 7: jeweils in schematischer Teildarstellung weitere Ausführungsformen einer mehrspurigen Behälterbehandlungsmaschine.

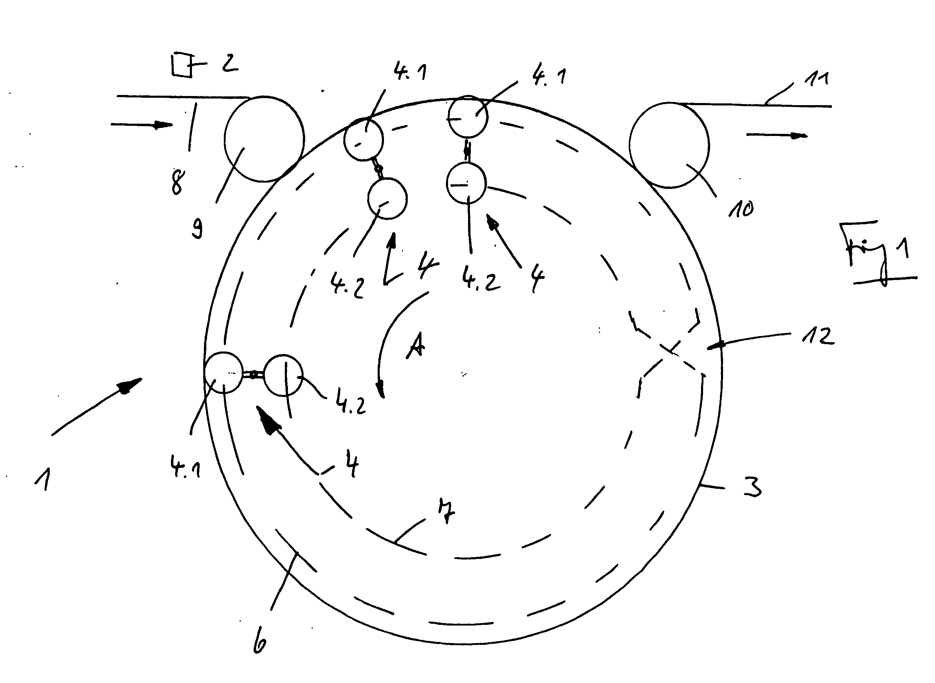

Die In der Figur 1 allgemein mit 1 bezeichnete Behälterbehandlungsmaschine dient zum Behandeln von Behältern 2, die in den Figuren 1 - 3 als Dosen dargestellt sind. Die Behälterbehandlungsmaschine 1 besteht u.a. aus einem entsprechend dem Pfeil A der Figur 1 um eine vertikale Maschinenachse kontinuierlich oder diskontinuierlich bzw. getaktet umlaufend antreibbaren Rotor 3, der im Bereich seines Umfangs in gleichmäßigen Winkelabständen um die vertikale Maschinenachse verteilt mehrere Behälteraufnahmeeinheiten 4 aufweist, und zwar mit jeweils zwei Behälteraufnahmen 4.1 und 4.2. Diese sind bei der dargestellten Ausführungsform tragtellerartig ausgebildet, auf denen die Behälter 2 während der Behandlung mit ihrem Behälterboden aufstehend in geeigneter Weise gehalten sind, und zwar mit ihrer Behälterachse in vertikaler Richtung orientiert.

Die beiden Behälteraufnahmen 4.1 und 4.2 jeder Behälteraufnahmeeinheit 4 sind jeweils an einem Tragelement 5 vorgesehen, und zwar bei der dargestellten Ausführungsform bezogen auf eine vertikale, parallel zur Maschinenachse orientierte Tragelementachse TA einander diametral gegenüberliegend und im selben radialen Abstand von dieser Achse. Durch einen nicht dargestellten Antrieb ist jede Behälteraufnahmeeinheit 4 bzw. deren Tragelement 5 um die Achse TA gesteuert dreh- oder schwenkbar, und zwar derart, dass bezogen auf die vertikale Maschinenachse in der einen Endstellung der Schwenk- oder Drehbewegung sich die Behälteraufnahmen 4.1 radial weiter außen befinden als die Behälteraufnahmen 4.2 und in der anderen Endstellung der Schwenk- und Drehbewegung sich die Behälteraufnahmen 4.2 radial weiter außen befinden als die Behälteraufnahmen 4.1.

Bei umlaufendem Rotor 3 werden somit diejenigen Behälteraufnahmen 4.1 bzw. 4.2, die sich bezogen auf die vertikale Maschinenachse weiter außen befinden, auf einer äußeren Bahn oder Spur 6 und diejenigen Behälteraufnahmen 4.2 bzw. 4.1, die sich bezogen auf die vertikale Maschinenachse weiter innen befinden, auf einer inneren Bahn oder Spur 7 bewegt, wobei beide Spuren 6 bzw. 7 jeweils kreisförmig und die vertikale Maschinenachse umschließend ausgebildet sind.

Die zu behandelnden Behälter 2 werden über einen Transporteur 8 zugeführt und über einen den Behältereinlauf bildenden Transportstern 9 jeweils einzeln auf eine sich auf der äußeren Spur 6 am Transportstern 9 vorbeibewegende Behälteraufnahme 4.1 bzw. 4.2 übergeben. Die behandelten Behälter 2 werden jeweils von einem den Behälterauslauf bildenden Transportstern 10 von den sich an diesem Transportstern auf der äußeren Spur 6 vorbeibewegenden Behälteraufnahmen 4.1 bzw. 4.2 abgenommen und an einen Transporteur 11 zum Abtransportieren der behandelten Behälter 2 weitergeleitet.

Im Einzelnen erfolgt die Steuerung der Behälterbehandlungsmaschine 1 beispielsweise derart, dass jeder mit dem Transportstern 9 z.B. an eine Behälteraufnahme 4.1 übergebene Behälter 2 erst nach einem nahezu zweimaligen Umlauf des Rotors 3, d.h. erst nach einem Passieren der von beiden Spuren 6 und 7 gebildeten Transportstrecke an den Transportstern 10 gelangt und von diesem an den Transporteur 11 weitergeleitet wird.

Ein auf der radial außen liegenden Behälteraufnahme 4.1 einer betrachteten Behälteraufnahmeeinheit 4 beim Passieren des Transportsternes 9 aufgesetzter und mit dem umlaufenden Rotor 3 auf der Spur 6 bewegter Behälter 2 gelangt mit seiner Behälteraufnahme 4.1 schließlich an eine Wechselposition 12, die sich beispielsweise in Drehrichtung A des Rotors 3 vor dem vom Transportstern 10 gebildeten Behälterauslauf befindet. An dieser Wechselposition 12 erfolgt ein Drehen bzw. Schwenken der Behälteraufnahmeeinheit 4 um 180°um ihre Achse TA, sodass der bis dahin mit der Behälteraufnahme 4.1 auf der äußeren Spur 6 bewegte Behälter 2 sich nunmehr zusammen mit seiner Behälteraufnahme 4.1 auf der inneren Spur 7 bewegt und sich damit außerhalb des Wirkungsbereichs des Transportsternes 10 befindet. Beim Vorbeibewegen am Transportstern 10 kann der bereits behandelte Behälter, der nunmehr auf der radial außen liegenden Behälteraufnahme 4.2 der betrachteten Behälteraufnahmeeinheit 4 angeordnet ist und auf der Spur 6 bewegt wird, abgenommen und zur Weiterleitung an den Transporteur 11 ausgeschleust werden.

Mit der weiteren Drehbewegung des Rotors 3 gelangt die betrachtete Behälteraufnahmeeinheit 4 wieder in den Wirkungsbereich des Transportsternes 9, an dem dann auf der außen liegenden Behälteraufnahme 4.2 ein neuer noch nicht behandelter Behälter 2 aufgesetzt werden kann. Sobald die betrachtete Behälteraufnahmeeinheit 4 mit der Drehbewegung des Rotors 3 wiederum an die Wechselposition 12 gelangt ist, erfolgt ein erneutes Drehen bzw. Schwenken der betrachteten Behälteraufnahmeeinheit 4 um 180° um die Achse TA, sodass dann der Behälter 2 auf der nunmehr wieder außen liegenden und auf der Spur 6 bewegten Behälteraufnahme 4.1 vom Transportstern 10 an den Transporteur 11 ausgeschleust wird.

Die Behälter 2 werden über den Transporteur 8 als einspuriger Behälterstrom zugeführt, von dem Transportstern 9 nach Art eines einspurigen Behälterstroms nach einander an die Behälteraufnahmen übergeben, von dem Transportstern 10 nach Art eines einspurigen Behälterstroms nach einander von den Behälteraufnahmen abgenommen und über den Transporteur 11 als einspuriger Behälterstrom abgeführt.

Die Behandlung jedes Behälters 2 erfolgt somit jeweils auf zwei Spuren 6 und 7, d.h. auf einer Wegstrecke, die nahezu der zweifachen Umdrehung des Rotors 3 entspricht. Hierdurch ist es möglich, bei reduziertem Durchmesser des Rotors 3 und damit bei reduziertem Platzbedarf für die Behälterbehandlungsmaschine 1 eine hohe Leistung (Anzahl der je Zeiteinheit bearbeiteten Behälter 2) zu erreichen, und zwar bei einer relativ einfachen konstruktiven Ausbildung. Das Drehen bzw. Schwenken der Behälteraufnahmeeinheiten 4 um ihre Achsen TA erfolgt entweder zwangsgesteuert mit der Drehbewegung des Rotors 1 über Getriebe und/oder Kurvensteuerungen oder aber über eigenständige, vorzugsweise hinsichtlich Drehzahl, Drehwinkel und Drehrichtung beliebig steuerbare Antriebe.

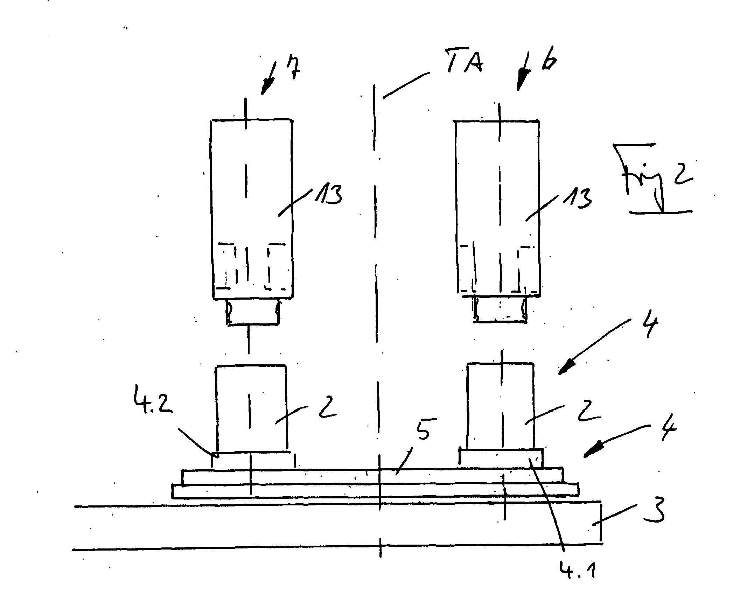

Ist die Behälterbehandlungsmaschine 1 eine Füllmaschine, so sind, wie in der Figur 2 dargestellt, über jeder Spur 6 und 7 jeweils mehrere Füllelemente 13 um die vertikale Maschinenachse in gleichmäßigen Winkelabständen verteilt vorgesehen, und zwar derart, dass diese Füllelemente 13 mit dem Rotor 3 umlaufen. Jeder Behälteraufnahmeeinheit 4 sind dann bei dieser Ausführungsform zwei Füllelemente 13 zugeordnet, und zwar ein Füllelement 13 über der Spur 6 und ein Füllelement 13 über der Spur 7 derart, dass sich diese Füllelemente 13 exakt über den Behälteraufnahmen 4.1 bzw. 4.2 in den Endstellungen der Schwenk- oder Drehbewegung der Behälteraufnahmeeinheiten 4 befinden. Die Anzahl der auf die beiden Spuren 6 und 7 verteilten Füllelemente 13 ist somit gleich der Anzahl der Behälteraufnahmen 4.1 und 4.2 je Behälteraufnahmeeinheit multipliziert mit der Anzahl dieser Einheiten.

Nach Übergabe eines Behälters 2 beispielsweise auf eine sich auf der Spur 6 bewegende Behälteraufnahme 4.1 erfolgt in einer ersten Füllphase ein teilweises Füllen dieses Behälters 2 mit dem der Spur 6 zugeordneten Füllelement 13. Vor Erreichen der Wechselposition 12 wird der Füllvorgang unterbrochen. Nach dem Spurwechsel wird der Füllvorgang für den sich weiterhin auf der Behälteraufnahme 4.1 befindlichen, aber nunmehr auf der Spur 7 bewegten Behälter 2 mit dem dieser Spur 7 zugeordneten Füllelement 13 in einer zweiten Füllphase fortgesetzt, und zwar bis zum erneuten Erreichen der Wechselposition 12. Nach einem erneuten Spurwechsel kann bei mit der Behälteraufnahme 4.1 wieder auf der Spur 6 bewegtem Behälter 2 bis zum Erreichen des Transportsternes 10 noch ein Nachfüllen erfolgen. Die in den beiden Füllphasen in den jeweiligen Behälter eingebrachte und gemessene Füllgutmenge wird addiert, sodass mit dem Nachfüllen die für die Behälter 2 erforderliche Füllmenge sehr exakt eingehalten werden kann. In analoger Weise erfolgt das Füllen solcher Behälter 2, die von dem Transportstern 9 auf die Behälteraufnahmen 4.2 übergeben wurden.

Selbstverständlich sind auch andere Methoden möglich, beispielsweise eine Vorbehandlung der Behälter auf der Spur 6 oder auf einer Teillänge dieser Spur und ein anschließendes Füllen auf der Spur 7 usw.

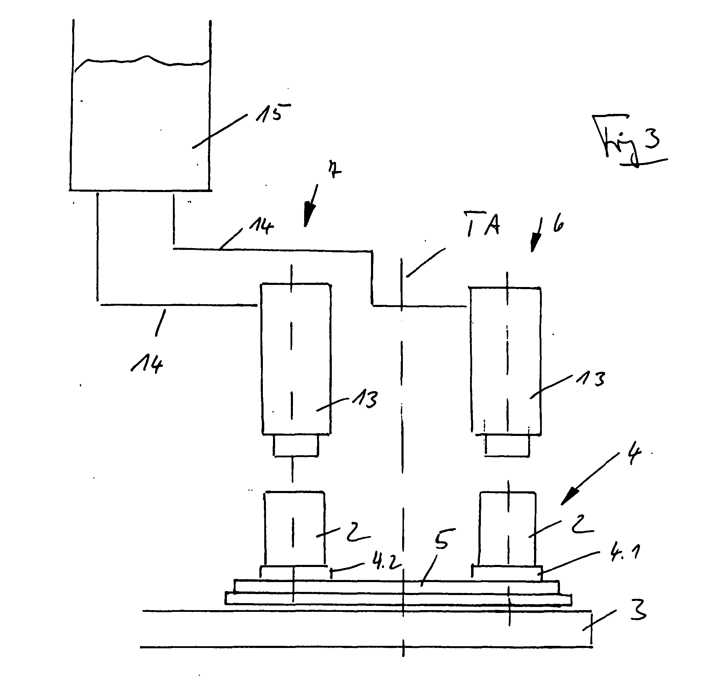

Die Figur 3 zeigt in einer Darstellung wie Figur 2 eine weitere Ausführungsform, bei der die jeder Behälteraufnahmeeinheit 4 zugeordneten Füllelemente 13 jeweils über einer Behälteraufnahme 4.1 und 4.2 vorgesehen sind und mit der Behälteraufnahmeeinheit 4 beim Schwenken um die Achse TA mitgeschwenkt werden. Über flexible Leitungen 14 (z.B. Schlauchleitungen) sind die Füllelemente 13 mit dem das flüssige Füllgut enthaltenden und am Rotor 3 vorgesehenen Ringkessel 15 verbunden.

Diese Ausführungsform, bei der nicht nur die Behälteraufnahmen 4.1 und 4.2, sondern auch die weiteren Funktionselemente jeder Behandlungsposition für das Wechseln der Spuren 6 und 7 um die jeweilige Achse TA geschwenkt werden, hat den Vorteil, dass die Behandlung jedes Behälters 2 beim Spurwechseln, d.h. an der Wechselposition 12 nicht unterbrochen werden muss, sondern kontinuierlich durchgeführt werden kann, so dass die für die jeweilige Behandlung bei einer bestimmten Drehzahl des Rotors 3 zur Verfügung stehende Zeit gegenüber der Ausführung der Fig. 2 wesentlich verlängert wird. Anstelle einer Verbindung der Füllelemente 13 über Schläuche 14 kann auch ein Drehverteiler vorgesehen sein, der jedes Füllelement 13 mit dem Ringkessel 15 verbindet, wobei dieser Drehverteiler zugleich auch Steuerfunktionen aufweisen kann.

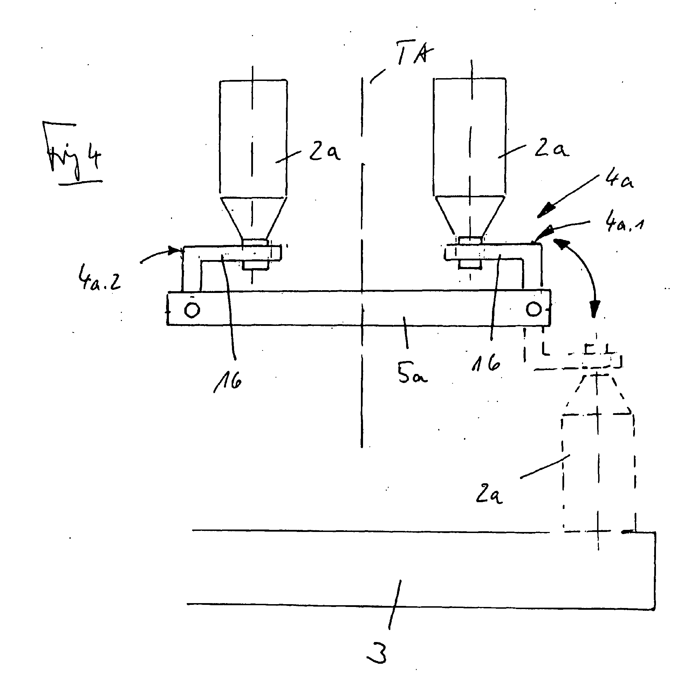

Die Figur 4 zeigt sehr schematisch und in einer Darstellung ähnlich den Figuren 2 und 3 eine Behälteraufnahmeeinheit 4a einer Maschine zur Behandlung von Behältern 2a in Form von Flaschen. Die Behälteraufnahmeeinheit 4a ist in gleicher Weise, wie dies für die Behälteraufnahmeeinheit 4 beschrieben wurde, zusammen mit einer Vielzahl gleicher Behälteraufnahmeeinheiten 4a am Umfangsbereich des um die vertikale Maschinenachse umlaufenden Rotors 3 angeordnet ist. Jede Behälteraufnahmeeinheit 4a besitzt zwei Behälteraufnahmen 4a.1 und 4a.2, die jeweils von einem Schwenkarm 16 mit Greifer an dem Tragelement 5a gebildet sind. Jeder Schwenkarm 16 ist so ausgebildet, dass er den zu behandelnden Behälter 2a im Bereich der Behälter- bzw. Flaschenöffnung, d.h. am Flaschenhals fasst und festhält. Die Schwenkarme 16 sind jeweils um eine horizontale Achse schwenkbar, die tangential zur Dreh- oder Umlaufrichtung A des Rotors 3 orientiert ist. Mit den Schwenkarmen 15 sind die Behälter 2a aus einer Normallage, in der die Behälteröffnung oben liegt, in eine Behandlungs- oder Überkopflage schwenkbar, in der die Behälter 2a mit ihrer Behälteröffnung unten liegend gehalten sind, und zwar jeweils mit der Behälterachse in vertikaler Richtung orientiert.

Für die Behandlung werden die Behälter 2a in ihrer Überkopflage auf den Spuren 6 und 7 bewegt, wobei während der Behandlung wiederum wenigstens ein Spurwechsel an der Wechselposition 12 erfolgt, und zwar durch Drehen bzw. Schwenken der Behälteraufnahmeeinheiten 4a bzw. der Tragelemente 5a um ihre parallel zur vertikalen Maschinenachse orientierte Trägerachse TA. Die Übergabe jedes Behälters 2a an eine auf der Spur 6 bewegte Behälteraufnahme 4a.1 bzw. 4a.2 erfolgt am Behältereinlauf in der Normallage (mit der Behälteröffnung oben). In dieser Normallage erfolgt auch die Abgabe jedes behandelten Behälters 2a am Behälterauslauf. Die Behandlung der Behälter 2a erfolgt bei dieser Ausführungsform z.B. unter zweifachem Spurwechsel, wie dies vorstehend im Zusammenhang mit der Figur 2 beschrieben wurde. Bei dieser Ausführungsform werden die Behälter 2a der Maschine bzw. dem Behältereinlauf wiederum als einspuriger Behälterstrom zugeführt. Die behandelten Behälter 2a werden einzeln nacheinander an dem Behälterauslauf von dem Rotor 3 bzw. den Behälteraufnahmen 4a.1 oder 4a.2 abgenommen und als einspuriger Behälterstrom aus der Maschine ausgeleitet.

Die Figuren 1 - 4 treffen Ausführungsformen, bei denen jede Behälteraufnahmeeinheit 4 bzw. 4a zwei Behälteraufnahmen 4.1, 4.2 bzw. 4a.1 und 4a.2 aufweist. Selbstverständlich besteht die Möglichkeit, die Behälteraufnahmeeinheiten so auszubilden, dass beispielsweise im selben radialen Abstand um die Aufnahmeachse TA versetzt mehr als zwei Behälteraufnahmen vorgesehen sind.

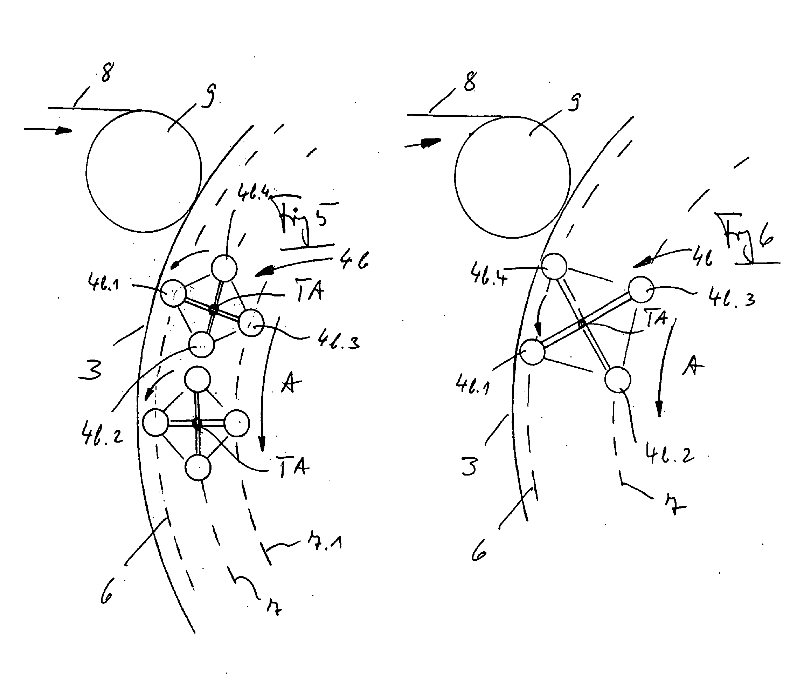

Die Figur 5 zeigt eine Ausführung, bei der am Umfangsbereich des Rotors 3 Behälteraufnahmeeinheiten 4b vorgesehen sind, die von ihrer Funktion her den Behälteraufnahmeeinheiten 4 entsprechen, jedoch jeweils insgesamt vier Behälteraufnahmen 4b.1 - 4b.4 aufweisen. Bei dieser Ausführungsform sind die einzelnen Behälteraufnahmeeinheiten 4b so gesteuert, dass jeder von einem Behälteraufnahmen 4b.1 - 4b.4 aufgenommene Behälter mit dem umlaufenden Rotor 3 auf insgesamt vier Spuren bewegt wird, nämlich auf der äußeren Spur 6, auf der der Spur 6 benachbarten weiter innen liegenden Spur 7, auf einer der Spur 7 benachbarten noch weiter innen liegenden Spur 7.1 sowie nochmals auf der Spur 7, bis der jeweilige Behälter dann nach einem nochmaligen Spurwechsel auf die Spur 6 an den Behälterauslauf gelangt.

Die Endstellungen der Schwenk- bzw. Drehbewegung der Behälteraufnahmeeinheiten 4b um ihre Achsen TA sind dafür so gewählt, dass sich in jeder Endstellung jeweils eine Behälteraufnahme auf der Spur 6, eine weitere Behälteraufnahme auf der Spur 7.1 sowie zwei Behälteraufnahmen auf der Spur 7 befinden, d.h. in der in der Figur 6 dargestellten Situation die Behälteraufnahme 4b.1 auf der Spur 6, die Behälteraufnahme 4b.3 auf der Spur 7.1 und die beiden Behälteraufnahmen 4b.2 und 4b.4 auf der Spur 7.

Zur Erläuterung der Wirkungsweise wird wiederum eine Behälteraufnahmeeinheit 4b betrachtet und es wird davon ausgegangen, dass sich die Behälteraufnahme 4.b1 dieser Behälteraufnahmeeinheit beim Vorbeibewegen an dem Behältereinlauf (Transportstern 9) auf der außen liegenden Spur 6 befindet, also ein Behälter an diese Behälteraufnahme 4b.1 übergeben und der der Spur 6 zugeordneten Behandlung unterzogen wird.

Mit dem umlaufenden Rotor 3 gelangt diese Behälteraufnahmeeinheit 4b dann an die Wechselposition 12, in der die Behälteraufnahmeeinheit 4b für den Spurwechsel um ihre Achse TA um 90° geschwenkt wird, so dass sich dann die Behälteraufnahme 4b.1 auf der Spur 7 befindet, und zwar an der bezogen auf die Drehrichtung A des Rotors 3 vorauseilenden Seite der Behälteraufnahmeeinheit 4b, und der dortige Behälter der der Spur 7 sowie der vorauseilenden Position zugeordneten Behandlung unterzogen wird.

Gelangt die betrachtete Behälteraufnahmeeinheit 4b mit dem umlaufenden Rotor 3 erneut an die Wechselposition 12, so folgt ein weiteres Drehen dieser Behälteraufnahmeeinheit 4b um 90°, so dass sich der auf der Behälteraufnahme 4b.1 befindliche Behälter nunmehr auf der innen liegenden Spur 7.1 bewegt und der dortigen Behandlung unterzogen wird. Bei dem erneuten erreichen der Schalt- oder Wechselposition 12 erfolgt ein erneutes Drehen der Behälteraufnahmeeinheit 4b um 90°, so dass die Behälteraufnahme 4b.1 und der dortigen Behälter wieder auf die Spur 7 gelangen, allerdings an der bezogen auf die Drehrichtung A des Rotors 3 nacheilenden Seite der Behälteraufnahmeeinheit 4b, so dass der auf der Behälteraufnahme 4b.1 angeordnete Behälter der der Spur 7 sowie der nacheilenden Position zugeordneten Behandlung unterzogen wird. Diese Behandlung kann von der Behandlung an der vorauseilenden Position unterschiedlich sein.

Bei dem nächsten Passieren der Wechselposition 12 folgt wiederum ein Drehen der Behälteraufnahmeeinheit 4b um 90°, so dass die Behälteraufnahme 4b.1 mit ihrem Behälter mit dem erneuten Spurwechsel wieder auf die Spur 6 gelangt und auf dieser Spur am Behälterauslauf aus der Maschine ausgeschleust werden kann.

Jeder auf einer Behälteraufnahme 4b.1 - 4b.3 einer Behälteraufnahmeeinheit 4b positionierte Behälter wird also während seiner Behandlung auf insgesamt vier Spuren bewegt, nämlich jeweils einmal auf der Spur 6 und der Spur 7.1 und zweimal auf der Spur 7, so dass erst nach viermaligem Passieren der Wechselposition 12 der jeweilige Behälter aus der Maschine ausgeschleust wird. Hierdurch ergibt sich auch bei kleinem Durchmesser des Rotors 3 eine extrem lange Behandlungsstrecke und damit auch bei hoher Drehzahl des Rotors 3 eine ausreichend lange Behandlungsdauer.

Es versteht sich, dass auch bei dieser Ausführungsform am jede andere Behälteraufnahme 4b.2 - 4b.4, die sich beim Passieren des von dem Transportstern 9 gebildeten Behältereinlaufs auf der äußeren Spur 6 bewegt, jeweils ein Behälter übergeben wird, der dann zusammen mit dieser Behälteraufnahme in gleicher Weise, wie dies vorstehend für die Behälteraufnahme 4b.1 der betrachteten Behälteraufnahmeeinheit 4b beschrieben wurde, auf den verschiedenen Spuren 6, 7 und 7.1 bewegt wird.

Die Figur 6 zeigt eine Ausführungsform, die sich von der Ausführungsform der Figur 5 im wesentlichen nur dadurch unterscheidet, dass die Steuerung der dort wiederum mit 4b bezeichneten Behälteraufnahmeeinheiten so erfolgt, dass in jeder Endstellung der Schwenk- oder Drehbewegung der Behälteraufnahmeeinheiten sich zwei Behälteraufnahmen, nämlich bei der in der Figur 6 dargestellten Situationen die Behälteraufnahmen 4b.1 und 4b.4 auf der Spur 6 und zwei Behälteraufnahmen, nämlich bei der Darstellung der Figur 6 die Behälteraufnahmen 4b.2 und 4b.3 auf der Spur 7 befinden. Jeweils beim Passieren der Wechselposition 12 erfolgt für den Spurwechsel ein Schwenken jeder Behälteraufnahmeeinheit 4b um die Achse TA entweder um 90° oder aber um 180°.

Im ersten Fall (Schwenken um 90°) ist die entsprechende Maschine so ausgebildet, dass die Übergabe eines Behälters an eine Behälteraufnahme sowie auch die Abnahme eines Behälters von einer Behälteraufnahme nur dann möglich ist, wenn sich diese Behälteraufnahme auf der Spur 6 befindet und eine vorgegebene Positionierung in Bezug auf die übrigen Behälteraufnahmen der jeweiligen Behälteraufnahmeeinheit 4b aufweist, beispielsweise die Position der Behälteraufnahme 4b.1 der Figur 6. Bei dieser Ausführung wird dann wiederum jeder auf einer Behälteraufnahme angeordnete Behälter während der Behandlung, d.h. zwischen der Übergabe an eine Behälteraufnahme und dem Ausschleusen aus der Maschine auf vier Spuren bewegt, nämlich zunächst auf der Spur 6, dann zweimal auf der Spur 7 und schließlich erneut auf der Spur 6.

Im zweiten Fall (Schwenken um 180°) sind die Behälteraufnahmeeinheiten 4b derart am Umfangsbereich des Rotors 3 angeordnet, dass die Behälteraufnahmen 4b1 - 4b4 auf der äußeren Spur 6 jeweils den selben Abstand voneinander aufweisen, d.h. der Abstand zwischen zwei auf der äußeren Spur 6 befindlichen Behälteraufnahmen jeder Behälteraufnahmeeinheit 4b ist auch gleich im Abstand, den die in Drehrichtung A des Rotors 3 aufeinander folgenden Behälteraufnahmen benachbarter Behälteraufnahmeeinheiten 4b voneinander besitzen. An jede Behälteraufnahme, die auf der Spur 6 an dem von dem Transportstern 9 gebildeten Behältereinlauf vorbeibewegt wird, kann jeweils ein Behälter übergeben werden. In einer analoger Weise kann von allen auf der Spur 6 am Behälterauslauf vorbei bewegten Behälteraufnahmen der jeweils behandelnde Behälter abgenommen und ausgeschleust werden.

Die Behandlung jedes Behälters erfolgt auf zwei Spuren 6 und 7 bei zweimaligem Spurwechsel, so dass diese Ausführung letztlich der Ausführung der Figur 1 entspricht, lediglich mit dem Unterschied, dass jede Behälteraufnahmeeinheit 4b nicht nur zwei Behälteraufnahmen, sondern insgesamt vier Behälteraufnahmen 4b1 - 4b4 aufweist.

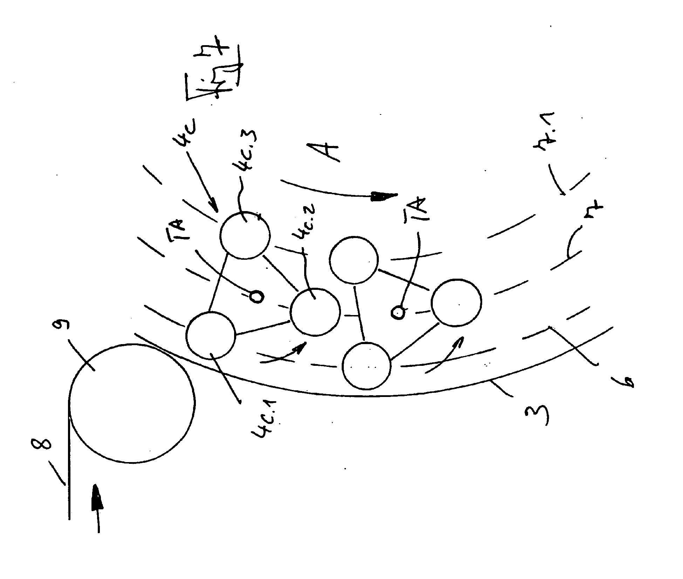

Die Figur 7 zeigt in schematischer Darstellung als weitere mögliche Ausführungsform eine Maschine mit Behälteraufnahmeeinheiten 4c am Umfangsbereich des Rotors 3. Jede Behälteranordnung 4c besitzt drei Behälteraufnahmen 4c.1, 4c.2 und 4c.3, die jeweils um 120° versetzt um die Aufnahmeachse TA und in dem selben radialen Abstand von dieser Achse vorgesehen sind.

Die behandelten und auf den Behälteraufnahmen 4c.1, 4c.2 und 4c.3 angeordneten Behälter werden durch dreimaliges Drehen jeder Behälteraufnahmeeinheit 4c um die Achse TA um jeweils 120° auf drei Spuren 6, 7 und 7.1 während der Behandlung bewegt.

Allen beschriebenen Ausführungsform ist gemeinsam, dass die Behälter 2 bzw. 2a jeweils als einspuriger Behälterstrom im Behältereinlauf zugeführt und dort jeweils in einem einspurigen Behälterstrom nacheinander an die sich auf der äußeren Spur 6 an der Behälteraufgabe vorbeibewegenden Behälteraufnahmen übergeben werden, und die behandelten Behälter jeweils nach Art eines einspurigen Behälterstrom nacheinander am Behälterauslauf von den sich dort auf der äußeren Spur 6 vorbeibewegenden Behälteraufnahmen abgenommen werden. Die Aufgabe der Behälter an die Maschine sowie das Abführen der Behälter aus der Maschine 1 kann somit mit einfachen und bewährten Mitteln erfolgen, was ganz entscheidend zur Betriebssicherheit der jeweiligen Behandlungsmaschine 1 beiträgt.

Die Behälterbehandlungsmaschinen 1 können für die unterschiedlichsten Behandlungszwecke ausgebildet sein, beispielsweise auch als Rinser, Sterilisator, Verschließer, Etikettiermaschine usw.. Die Behälteraufnahmen sowie auch die für die Behandlung verwendeten Funktionselemente können die unterschiedlichste Ausbildung aufweisen, und zwar insbesondere auch an den jeweiligen Verwendungszweck und/oder an die jeweiligen Art, Form und/oder Größe der Behälter angepasst.

Dabei ist erfindungsgemäß insbesondere auch vorgesehen, die Behälteraufnahmen als so genannte Halsringaufnahmen auszubilden, so dass die Behälter 2 nach ihrer Übergabe an den Rotor 3 der Behälterbehandlungsmaschine nicht auf ihrem Behälterboden aufstehen, sondern an einem, unterhalb der Behältermündung ausgebildeten Kragen gehalten werden. Dem Fachmann sind derartige Ausgestaltungen und Verfahrensweisen unter dem Begriff "Neckhandling" bekannt, so dass an dieser Stelle auf eine ausführliche Beschreibung verzichtete werden kann.

Weiterhin ist bei allen Ausführungsformen gemeinsam, dass die Behälteraufnahmen 4.1, 4.2, 4a.1, 4a.2, 4b.1 - 4b.4 bzw. 4c.1 - 4c.3 so ausgebildet sind, dass die Behälter 2 bzw. 2a an diesen Behälteraufnahmen insbesondere auch gegenüber den durch die Drehbewegung des Rotors 3 erzeugten Zentrifugalkräften gesichert gehalten sind.

Die Erfindung wurde voranstehend an einem Ausführungsbeispiel beschrieben. Es versteht sich, dass zahlreiche Änderungen sowie Abwandlungen möglich sind, ohne dass dadurch der der Erfindung zugrunde liegende Erfindungsgedanke verlassen wird.

### Bezugszeichenliste

- 1: Behälterbehandlungsmaschine
- 2, 2a: Behälter
- 3: Rotor
- 4, 4a, 4b, 4c: Behälteraufnahmeeinheit
- 4.1, 4.2: Behälteraufnahme
- 4a.1, 4a.2: Behälteraufnahme
- 4b.1 - 4b.4: Behälteraufnahme
- 4c.1 - 4c.3: Behälteraufnahme
- 5, 5a: Tragelement
- 6, 7, 7.1: Spur
- 8: Transporteur
- 9: Transportstern
- 10: Transportstern
- 11: Transporteur
- 12: Wechselposition
- 13: Füllelement
- 14: Schlauch
- 15: Ringkessel
- 16: Schwenkarm
- A: Drehbewegung des Rotors 3
- B: Schwenk- oder Drehbewegung des jeweiligen Behälteraufnahmeein-heit
- TA: Achse der Behälteraufnahmeeinheit

## Patentansprüche

1. Verfahren zum Füllen von Behältern (2) unter Verwendung einer Behälterfüllmaschine (1) umlaufender Bauart mit wenigstens einen um eine vertikale Maschinenachse umlaufend antreibbaren Rotor (3), wobei die Behälter (2) an wenigstens einer Behälteraufgabe (9) nacheinander an Behälteraufnahmen (4.1, 4.2; 4b.1 - 4b.4; 4c.1- 4c.3) am Rotor (3) übergeben und mit den Behälteraufnahmen (4.1, 4.2; 4b.1 - 4b.4; 4c.1- 4c.3) zum Füllen auf wenigstens einer Teillänge einer ersten, die vertikale Maschinenachse umschließenden Spur (6) sowie anschließend durch einen wenigstens einmaligen Spurwechsel mit den Behälteraufnahmen (4.1, 4.2; 4b.1 - 4b.4; 4c.1- 4c.3) zumindest auf einer Teillänge wenigstens einer zweiten, die vertikale Maschinenachse umschließenden Spur (7, 7.1) bewegt werden, **dadurch gekennzeichnet, dass** zur Erzielung einer hohen Leistung der Behälterfüllmaschine (1) bei reduziertem Durchmesser des Rotors (3) das Füllen des jeweiligen Behälters (2) auch auf der weiteren Spur (7, 7.1) nach dem Spurwechsel erfolgt.

2. Verfahren nach Anspruch 1, **dadurch gekennzeichnet, dass** während des Füllens der Spurwechsel des jeweiligen Behälters (2) an wenigstens einer vorgegebenen Winkelposition (12) der Drehbewegung des Rotors (3) oder mehrfach erfolgt.

3. Verfahren nach Anspruch 1 oder 2, **dadurch gekennzeichnet, dass** der wenigstens eine Spurwechsel durch Schwenken der Behälteraufnahmen (4.1, 4.2; 4b.1 - 4b.4; 4c.1 - 4c.3) um eine Achse (TA) parallel zur Maschinenachse erfolgt, und dass für das Füllen der Behälter (2) verwendete Füllelemente (13) mit den Behälteraufnahmen (4.1, 4.2; 4b.1 - 4b.4; 4c.1 - 4c.3) beim Spurwechsel mitgeschwenkt werden.

4. Verfahren nach einem der vorhergehenden Ansprüche, **dadurch gekennzeichnet dass** das Füllen bei wenigstens einem Spurwechsel unterbrochen und nach dem Spurwechsel weitergeführt wird.

5. Verfahren nach Anspruch 4, **dadurch gekennzeichnet, dass** die vor dem wenigstens einem Spurwechsel und nach dem wenigstens einem Spurwechsel in den jeweiligen Behälter (2) eingebrachten Füllgutmengen zu einem istwert addiert werden, und dass durch Vergleich mit einem Sollwert eine Restfüllgutmenge ermittelt wird, die dann in den jeweiligen Behälter (2) in einer Korrekturfüllphase eingebracht wird.

6. Verfahren nach Anspruch 5, **dadurch gekennzeichnet, dass** die Korrekturfüllphase nach einem weiteren Spurwechsel, vorzugsweise nach einem Spurwechsel auf die erste Spur (6) erfolgt.

7. Verfahren zum Behandeln von Behältern (2a) unter Verwendung einer Behälterbehandlungsmaschine (1) umlaufender Bauart mit wenigstens einen um eine vertikale Maschinenachse umlaufend angetriebenen Rotor (2), wobei die Behandlung der Behälter (2a) auf dem Rotor (3) erfolgt und die Behälter (2a) hierfür an wenigstens einer Behälteraufgabe (9) nacheinander Behälteraufnahmen (4a.1, 4a.2) am Rotor (3) übergeben und mit diesen auf wenigstens einer Teillänge einer ersten, die vertikale Maschinenachse umschließenden Spur sowie durch einen zumindest einmaligen Spurwechsel zumindest auf einer Teillänge wenigstens einer weiteren, die vertikale Maschinenachse umschließenden Spur (7, 7.1) während der Behandlung bewegt werden, und wobei die behandelten Behälter an wenigstens einem Behälterauslauf (10) vom Rotor (3) abgenommen werden, **dadurch gekennzeichnet, dass** die Behälter zum Reinigen und/oder Sterilisieren auf der ersten Spur (6) sowie auf der wenigstens einen weiteren Spur (7, 7.1) einer Rinser- und/oder Sterilisations-Behandlung unterzogen werden.

8. Verfahren nach Anspruch 7, **dadurch gekennzeichnet, dass** auf der ersten und der wenigstens einen weiteren Spur (6, 7, 7,1) eine Behandlung der Behälter (2a) mit unterschiedlichen flüssigen Reinigungsmedien erfolgt, beispielsweise auf der ersten Spur (6) oder auf einer Teilstrecke der ersten Spur (6) eine Vorspülung mit Wasser, vorzugsweise mit wieder verwendetem Wasser, auf einer weiteren, anschließenden Spur (7) eine Behandlung mit einem weiteren Behandlungsmedium, vorzugsweise mit einem Wasser und wenigstens ein Reinigungsmittel enthaltenden Behandlungsmedium, sowie nach einem weiteren Spurwechsel ein Nachspritzen zum Entfernen des Behandlungsmediums oder von Resten dieses Behandlungsmediums, beispielsweise mit Frischwasser, wobei dieses Nachspritzen beispielsweise auf der ersten Spur (6) erfolgt.

9. Verfahren nach Anspruch 7 oder 8, **dadurch gekennzeichnet, dass** die Behälter (2a) der wenigstens einen Behälteraufgabe (9) in einer aufrecht stehenden Lage mit der jeweiligen Behälteröffnung oben liegend zugeführt und an der Behälteraufgabe (9) vor Übergabe oder nach der Übergabe an jeweils eine Behälteraufnahme (4a.1, 4a.2) in eine von der aufrechten Lage abweichende Lage, beispielsweise in eine Überkopflage gebracht werden, und dass die Behälter (2a) nach dem Behandeln an den Behälteraufnahmen (4a.1, 4a.2) oder an dem wenigstens einem Behälterauslauf (10) in ihre aufrechte Lage zurückgebracht werden.

10. Verfahren nach einem der Ansprüche 7 - 9, **dadurch gekennzeichnet, dass** der wenigstens einmalige Spurwechsel durch eine Bewegung der Behälteraufnahmen (4a.1, 4a.2) mit den Behältern (2a) relativ zur Maschinenachse oder zum Rotor (3) erfolgt.

11. Verfahren nach einem der Ansprüche 7 - 10, **dadurch gekennzeichnet, dass** die Bewegung der Behälteraufnahmen (4a.1, 4a.2) beim Spurwechsel derart erfolgt, dass jede aus der ersten Spur (6) bewegte Behälteraufnahme (4a.1, 4a.2) durch eine andere Behälteraufnahme ersetzt wird.

12. Verfahren nach einem der Ansprüche 7 - 11, **dadurch gekennzeichnet, dass** die Behälteraufnahmen (4a.1, 4a.2) für den Spurwechsel zwischen der ersten und der wenigstens einen weiteren Spur (6, 7) und/oder für den Spurwechsel zwischen zwei weiteren Spuren (7, 7.1) relativ zur vertikalen Maschinenachse oder zum Rotor (3) derart bewegt werden, dass diese Relativbewegung zumindest eine radial zur Maschinenachse verlaufende Bewegungskomponente aufweist.

13. Verfahren nach Anspruch 12, **dadurch gekennzeichnet, dass** die Behälteraufnahmen (4a.1, 4a.2) für den Spurwechsel jeweils um eine gegenüber der Aufnahme radial versetzte und parallel oder annähernd parallel zur vertikalen Maschinenachse orientierte Achse (TA) geschwenkt werden.

14. Verfahren nach einem der Ansprüche 7 - 13, **dadurch gekennzeichnet, dass** die Behälteraufnahmen (4a.1, 4a.2) während des Umlaufs des Rotors (3) um die vertikale Maschinenachse wenigstens einmal um eine parallel oder annähernd parallel zur vertikalen Maschinenachse orientierte und gegenüber dem Behälteraufnahmen (4a.1, 4a.2) radial versetzte Dreh- oder Schwenkachse (TA) aus wenigstens einer ersten Position in eine zweite Position mit einem zur ersten Position unterschiedlichem radialen Abstand von der vertikalen Maschinenachse bewegt werden, und dass hierbei jeweils eine weitere Behälteraufnahme an die erste Position gelangt.

15. Verfahren nach einem der Ansprüche 7 - 14, **dadurch gekennzeichnet, dass** während der Rinser-Behandlung jedes Behälters (2, 2a) ein mehrfacher Spurwechsel erfolgt.

16. Verfahren nach einem der vorhergehenden Ansprüche, **dadurch gekennzeichnet, dass** die erste Spur (6) den größeren Abstand von der vertikalen Maschinenachse aufweist.

17. Verfahren nach einem der vorhergehenden Ansprüche, **dadurch gekennzeichnet, dass** die Behälter (2, 2a) während des Füllens oder der Rinser-Behandlung auf zwei Spuren (6, 7) bewegt werden.

18. Verfahren nach einem der vorhergehenden Ansprüche, **dadurch gekennzeichnet, dass** die behandelten Behälter (2, 2a) an dem wenigstens einen Behälterauslauf (10) auf der ersten Spur (6) entnommen werden.

19. Verfahren nach einem der vorhergehenden Ansprüche, **dadurch gekennzeichnet, dass** die Behälter (2, 2a) auf der ersten Spur (6) über einen Winkelbereich kleiner 360° und auf der wenigstens einer weiteren Spur (7, 7.1) über einen Winkelbereich von 360° oder annähernd 360° bewegt werden.

20. Verfahren nach einem der vorhergehenden Ansprüche, **dadurch gekennzeichnet, dass** die Behälter (2, 2a) der wenigstens einer Behälteraufgabe (9) als einspuriger Behälterstrom zugeführt und an dem wenigstens einem Behälterauslauf (10) als einspuriger Behälterstrom entnommen werden.

21. Verfahren nach einem der vorhergehenden Ansprüche, **dadurch gekennzeichnet, dass** die Behälter (2) auf den Behälteraufnahmen (4.1, 4.2; 4b.1 - 4b.4; 4c.1 - 4c.3) stehend angeordnet oder an den Behälteraufnahmen (4a.1, 4a.2) hängend gehalten sind.

22. Verfahren nach einem der vorhergehenden Ansprüche, **dadurch gekennzeichnet, dass** jeweils wenigstens zwei Behälteraufnahmen (4.1, 4.2; 4a.1, 4a.2; 4b.1 - 4b.4; 4c.1 - 4c.3) eine Behälteraufnahmeeinheit (4, 4a, 4b, 4c) bilden, bei der die Behälteraufnahmen im selben radialen Abstand von einer Aufnahmeachse (TA) angeordnet sind, und dass jede Behälteraufnahme (4, 4a, 4b, 4c) um diese Aufnahmeachse (TA) für den Spurwechsel gedreht bzw. geschwenkt wird.

23. Verfahren nach einem der vorhergehenden Ansprüche, **dadurch gekennzeichnet, dass** jeweils wenigstens zwei oder drei Behälteraufnahmen (4.1, 4.2; 4a.1, 4a.2; 4b.1 - 4b.4; 4c.1 - 4c.3) eine Behälteraufnahmeeinheit (4, 4a, 4b, 4c) bilden, bei der die Behälteraufnahmen im selben radialen Abstand von einer Aufnahmeachse (TA) angeordnet sind, und dass jede Behälteraufnahme (4, 4a, 4b, 4c) um diese Aufnahmeachse (TA) für den Spurwechsel gedreht bzw. geschwenkt wird.

24. Behälterbehandlungsmaschine in Form einer Füllmaschine umlaufender Bauart zum Füllen von Behältern (2) mit einem flüssigen Füllgut, mit wenigstens einem um eine vertikale Maschinenachse umlaufend angetriebenen Rotor (3) mit Behälteraufnahmen (4.1, 4.2; 4b.1 -4b.4; 4c.1 - 4c.3), wobei die zu füllenden Behälter (2) an wenigstens einer Behälteraufgabe (9) nacheinander an die dort auf einer ersten, die vertikale Maschinenachse umschließenden Spur (6) vorbei bewegten Behälteraufnahmen (4.1, 4.2; 4b.1 - 4b.4; 4c.1 - 4c.3) übergeben werden und die Behälter (2) nach dem Füllen an wenigstens einen Behälterauslauf von den Behälteraufnahmen (4.1, 4.2; 4b.1 - 4b.4; 4c.1 - 4c.3) abgenommen werden, die für einen Spurwechsel relativ zur vertikalen Maschinenachse oder zum Rotor (3) derart bewegbar sind, dass die auf den Behälteraufnahmen (4.1, 4.2; 4b.1 - 4b.4; 4c.1 - 4c.3) angeordneten Behälter (2) mit dem umlaufenden Rotor (3) durch einen zumindest einmaligen Spurwechsel jeweils zumindest auf einer Teillänge wenigstens einer zweiten, die vertikale Maschinenachse umschließenden Spur (7, 7.1) bewegt werden, **dadurch gekennzeichnet, dass** die Füllmaschine zur Erzielung einer hohen Leistung bei reduziertem Durchmesser des Rotors (3) für ein Füllen der Behälter (2) auch auf der weiteren Spur (7, 7.1) nach dem Spurwechsel ausgebildet ist.

25. Behälterbehandlungsmaschine nach Anspruch 24, **dadurch gekennzeichnet, dass** jeweils wenigstens zwei Behälteraufnahmen (4.1, 4.2; 4b.1 - 4b.4; 4c.1 - 4c.3) eine Behälteraufnahmeeinheit (4, 4b, 4c) bilden, bei der die Behälteraufnahmen im selben radialen Abstand von einer Aufnahmeachse (TA) angeordnet sind, dass jede Behälteraufnahmeeinheit (4, 4b, 4c) für den Spurwechsel um ihre Aufnahmeachse dreh- oder schwenkbar ist, und dass für das Füllen der Behälter (2) vorgesehene Füllelemente (13) mit der jeweiligen Behälteraufnahmeeinheit (4, 4b, 4c) mitschwenkbar ausgebildet sind.

26. Behälterbehandlungsmaschine nach Anspruch 24 oder 25, **dadurch gekennzeichnet, dass** die Behälteraufnahmen (4.1, 4.2; 4a.1, 4a.2; 4b.1 - 4b.4; 4c.1- 4c.3) derart steuerbar sind, dass die Behälter (2, 2a) während der Behandlung auf zwei oder drei Spuren (6, 7) bewegt werden.

27. Behälterbehandlungsmaschine nach einem der Ansprüche 24 - 26, **dadurch gekennzeichnet, dass** die Behälter (2, 2a) der wenigstens einer Behälteraufgabe (9) als einspuriger Behälterstrom zugeführt und/oder an dem wenigstens einem Behälterauslauf (10) als einspuriger Behälterstrom entnommen werden.

28. Behälterbehandlungsmaschine nach einem der Ansprüche 24 - 27, **dadurch gekennzeichnet, dass** die Behälteraufnahmen (4.1, 4.2; 4b.1 - 4b.4; 4c.1-4c.3) für eine stehende oder eine hängende Anordnung der Behälter (2) ausgebildet sind.

29. Behälterbehandlungsmaschine nach einem der Ansprüche 24 - 28, **dadurch gekennzeichnet, dass** jeweils wenigstens drei oder vier Behälteraufnahmen (4b.1 - 4b.4; 4c.1 - 4c.3) eine Behälteraufnahmeeinheit (4b, 4c) bilden, bei der die Behälteraufnahmen im selchen radialen Abstand von einer Aufnahmeachse (TA) angeordnet sind, und dass jede Behälteraufnahme (4b, 4c) um diese Aufnahmeachse (TA) für den Spurwechsel dreh- oder schwenkbar ist.

30. Behälterbehandlungsmaschine umlaufender Bauart zum Behandeln von Behältern (2a), mit wenigstens einem um eine vertikale Maschinenachse umlaufend angetriebenen Rotor (3) mit Behälteraufnahmen (4a.1, 4a.2; 4b.1-4b.4; 4c.1- 4c.3), wobei die zu behandelnden Behälter (2a) an wenigstens einer Behälteraufgabe (9) nacheinander an die dort auf einer ersten, die vertikale Maschinenachse umschließenden Spur (6) vorbeibewegten Behälteraufnahmen (4a.1, 4a.2; 4b.1 - 4b.4; 4c.1- 4c.3) übergeben werden und die Behälter nach der Behandlung an wenigstens einem Behälterauslauf von den Behälteraufnahmen (4a.1, 4a.2; 4b.1 - 4b.4; 4c.1- 4c.3) abgenommen werden, die für einen Spurwechsel relativ zur vertikalen Maschinenachse oder zum Rotor (3) derart bewegbar sind, dass die auf den Behälteraufnahmen (4a.1, 4a.2; 4b.1 - 4b.4; 4c.1- 4c.3) angeordneten Behälter (2a) während der Behandlung mit dem umlaufenden Rotor (3) durch einen zumindest einmaligen Spurwechsel jeweils zumindest auf einer Teillänge wenigstens einer weiteren, die vertikale Maschinenachse umschließenden Spur (7, 7.1) bewegt werden, **dadurch gekennzeichnet, dass** die Behälterbehandlungsmaschine als Rinser und/oder als Sterilisator zum Reinigen und/oder Sterilisieren der Behälter (2) sowohl auf der ersten Spur (6) als auch auf der mindestens einen weiteren Spur (7, 7.1) ausgebildet ist.

31. Behälterbehandlungsmaschine nach Anspruch 30, **gekennzeichnet durch** eine Ausbildung der Maschine in der Weise, dass auf der ersten und der wenigstens einen weiteren Spur (6, 7, 7.1) eine Behandlung der Behälter (2a) mit unterschiedlichen flüssigen Reinigungsmedien erfolgt, beispielsweise auf der ersten Spur (6) oder auf einer Teilstrecke der ersten Spur (6) eine Vorspülung mit Wasser, vorzugsweise mit wieder verwendetem Wasser, nach einem Spurwechsel auf einer weiteren, anschließenden Spur (7) eine Behandlung mit einem weiteren Behandlungsmedium, vorzugsweise mit einem Wasser und wenigstens ein Reinigungsmittel enthaltenden Behandlungsmedium, sowie nach einem weiteren Spurwechsel ein Nachspritzen zum Entfernen des Behandlungsmediums oder von Resten dieses Behandlungsmediums, beispielsweise mit Frischwasser, wobei dieses Nachspritzen beispielsweise auf der ersten Spur (6) erfolgt.

32. Behälterbehandlungsmaschine nach Anspruch 30 oder 31, **gekennzeichnet durch** eine Ausbildung der Maschine in der Weise, dass die Behälter (2a) der wenigstens einen Behälteraufgabe (9) in einer aufrecht stehenden Lage mit der jeweiligen Behälteröffnung oben liegend zugeführt und an der Behälteraufgabe (9) vor Übergabe oder nach der Übergabe an eine Behälteraufnahme (4a.1, 4a.2) in eine von der aufrechten Lage abweichende Lage, beispielsweise in eine Überkopflage gebracht werden, und dass die Behälter (2a) nach dem Behandeln an den Behälteraufnahmen (4a.1, 4a.2) oder an dem wenigstens einem Behälterauslauf (10) in ihre aufrechte Lage zurückgebracht werden.

33. Behälterbehandlungsmaschine nach einem der Ansprüche 30 - 32, **dadurch gekennzeichnet, dass** die erste Spur (6) den größeren Abstand von der vertikalen Maschinenachse aufweist.

34. Behälterbehandlungsmaschine nach einem der Ansprüche 30 - 33, **dadurch gekennzeichnet, dass** die Behälteraufnahmen (4a.1, 4a.2) derart steuerbar sind, dass die Behälter (2a) während der Behandlung auf zwei oder wenigstens drei Spuren (6, 7) bewegt werden.

35. Behälterbehandlungsmaschine nach einem der Ansprüche 30 - 34, **dadurch gekennzeichnet, dass** die Behälteraufnahmen (4a.1, 4a.2) derart steuerbar sind, dass die behandelten Behälter (2, 2a) an dem wenigstens einen Behälterauslauf (10) auf der ersten Spur (6) entnommen werden.

36. Behälterbehandlungsmaschine nach einem der Ansprüche 30 - 35, **dadurch gekennzeichnet, dass** die Behälter (2, 2a) während der Behandlung über einen Winkelbereich des umlaufenden Rotors (3) deutlich größer als 360° bewegt werden.

37. Behäkerbehandlungsmaschine nach Anspruch 36, **dadurch gekennzeichnet, dass** die Behälter (2, 2a) während der Behandlung auf der ersten Spur (6) über einen Winkelbereich kleiner 360° und auf der wenigstens einer weiteren Spur (7, 7.1) über einen Winkelbereich von 360° oder annähernd 360° bewegt werden.

38. Behälterbehandlungsmaschine nach einem der Ansprüche 30 - 37, **dadurch gekennzeichnet, dass** die Behälter (2, 2a) der wenigstens einer Behälteraufgabe (9) als einspuriger Behälterstrom zugeführt und/oder an dem wenigstens einem Behälterauslauf (10) als einspuriger Behälterstrom entnommen werden.

39. Behälterbehandlungsmaschine nach einem der Ansprüche 30 - 38, **dadurch gekennzeichnet, dass** die Behälteraufnahmen (4a.1, 4a.2) während des Umlaufs des Rotors (3) um die vertikale Maschinenachse wenigstens einmal um eine parallel oder annähernd parallel zur vertikalen Maschinenachse orientierte und gegenüber der Behälteraufnahme (4a.1, 4a.2) radial versetzte Dreh- oder Schwenkachse (TA) aus wenigstens einer ersten Position in eine zweite Position mit einem zur ersten Position unterschiedlichem radialen Abstand von der vertikalen Maschinenachse bewegbar sind, und dass hierbei jeweils eine weitere Behälteraufnahme an die erste Position gelangt.

40. Behälterbehandlungsmaschine nach einem der Ansprüche 30 - 39, **dadurch gekennzeichnet, dass** die Behälteraufnahmen (4a.1, 4a.2) für den Spurwechsel derart bewegbar sind, dass jede aus der ersten Spur (6) bewegte Behälteraufnahme (4a.1, 4a.2) durch eine andere Behälteraufnahme ersetzt wird.

41. Behälterbehandlungsmaschine nach einem der Ansprüche 30 - 40, **dadurch gekennzeichnet, dass** die Behälteraufnahmen (4a.1, 4a.2) für den Spurwechsel zwischen der ersten und der wenigstens einen weiteren Spur (6, 7) und/oder für den Spurwechsel zwischen zwei weiteren Spuren (7, 7.1) relativ zur vertikalen Maschinenachse oder zum Rotor (3) derart bewegbar sind, dass diese Relativbewegung zumindest eine radial zur Maschinenachse verlaufende Bewegungskomponente aufweist.

42. Behälterbehandlungsmaschine nach Anspruch 41, **dadurch gekennzeichnet, dass** die Behälteraufnahmen (4a.1, 4a.2) für den Spurwechsel jeweils um eine gegenüber der Aufnahme radial versetzte und parallel oder annähernd parallel zur vertikalen Maschinenachse orientierte Achse (TA) schwenkbar sind.

43. Behälterbehandlungsmaschine nach einem der Ansprüche 30 - 42, **dadurch gekennzeichnet, dass** die Behälteraufnahmen (4a.1, 4a.2) für eine hängende Anordnung der Behälter (2a) ausgebildet sind.

44. Behälterbehandlungsmaschine nach einem der Ansprüche 30 - 43, **dadurch gekennzeichnet, dass** jeweils wenigstens zwei oder wenigstens drei oder vier Behälteraufnahmen (4a.1, 4a.2) eine Behälteraufnahmeeinheit (4a) bilden, bei der die Behälteraufnahmen im selchen radialen Abstand von einer Aufnahmeachse (TA) angeordnet sind, und dass jede Behälteraufnahme (4a) um diese Aufnahmeachse (TA) für den Spurwechsel dreh- oder schwenkbar ist.

## Claims

1. Method for filling containers (2) using a container filling machine (1) of a rotary type with at least one rotor (3) which is driven to rotate about a vertical machine axis, wherein the containers (2) on at least one container feed (9) are transferred one after the other on container receivers (4.1, 4.2; 4b.1 - 4b.4; 4c.1 - 4c.3) on the rotor (3) and are moved with the container receivers (4.1, 4.2; 4b.1 - 4b.4; 4c.1 - 4c.3) for filling on at least one partial length of a first track (6) enclosing the vertical machine axis and then by an at least single track change with the container receivers (4.1, 4.2; 4b.1 - 4b.4; 4c.1 - 4c.3) at least on a partial length at least of a second track (7, 7.1) enclosing the vertical machine axis, **characterised in that**, to achieve a high performance of the container filling machine (1), with a reduced diameter of the rotor (3), the filling of the particular container (2) also takes place on the other track (7, 7.1) after the track change.

2. Method according to claim 1, **characterised in that**, during filling, the track change of the particular container (2) takes place at at least one specified angular position (12) of the rotary movement of the rotor (3) or multiple times.

3. Method according to claim 1 or 2, **characterised in that** the at least one track change takes place by pivoting the container receivers (4.1, 4.2; 4b.1 - 4b.4; 4c.1 - 4c.3) around an axis (TA) parallel to the machine axis, and that the filling elements (13) used to fill the containers (2) are also pivoted with the container receivers (4.1, 4.2; 4b.1 - 4b.4; 4c.1 - 4c.3) at the track change.

4. Method according to any one of the preceding claims, **characterised in that** the filling is interrupted in the event of at least one track change and is continued after the track change.

5. Method according to claim 4, **characterised in that** the quantities of filling material introduced in the particular container (2) before the at least one track change and after the at least one track change are added to make an actual value, and that by comparison with a target value a residual filling material quantity is calculated which is then introduced into the particular container (2) in a correcting fill phase.

6. Method according to claim 5, **characterised in that** the correcting fill phase takes place after a further track change, preferably after a track change onto the first track (6).

7. Method for handling containers (2a) using a container handling machine (1) of a rotary type with at least one rotor (2) which is driven to rotate about a vertical machine axis, wherein the handling of the containers (2a) takes place on the rotor (3) and to this end the containers (2a) on at least one container feed (9) are transferred one after the other on container receivers (4a.1, 4a.2) on the rotor (3) and are moved with the latter on at least one partial length of a first track (6) enclosing the vertical machine axis and by an at least single track change at least on a partial length at least of one other track (7, 7.1) enclosing the vertical machine axis during the handling, and wherein the handled containers are taken from the rotor (3) at at least one container outlet (10), **characterised in that** the containers, for cleaning and / or sterilisation, undergo a rinser and / or sterilisation treatment on the first track (6) and on the at least one other track (7, 7.1).

8. Method according to claim 7, **characterised in that** on the first and the at least one other track (6, 7, 7.1) a treatment of the containers (2a) takes place with various liquid cleaning media, for example on the first track (6) or on a partial stretch of the first track (6), a pre-rinsing with water, preferably with re-used water, on another subsequent track (7) a treatment with another treatment medium, preferably with a treatment medium containing water and at least one cleaning agent, and after a further track change, a subsequent spraying to remove the treatment medium or residues of this treatment medium, for example with fresh water, wherein this subsequent spraying takes place for example on the first track (8).

9. Method according to claim 7 or 8, **characterised in that** the containers (2a) of the at least one container feed (9) are supplied in an upright position with the particular container opening at the top and on the container feed (9) before the transfer or after the transfer onto an in each case one container receiver (4a.1, 4a.2) are brought into a position departing from the upright position, for example into an overhead position, and that the containers (2a) are returned to their upright position after the handling on the container receivers (4a.1, 4a.2) or on the at least one container outlet (10).

10. Method according to any one of claims 7 - 9, **characterised in that** the at least single track change takes place by a movement of the container receivers (4a.1, 4a.2) with the containers (2a) relative to the machine axis or to the rotor (3).

11. Method according to any one of claims 7 -10, **characterised in that** the movement of the container receivers (4a.1, 4a.2) at the track change takes place in such a way that each container receiver (4a.1, 4a.2) moved out of the first track (6) is replaced by another container receiver.

12. Method according to any one of claims 7 - 11, **characterised in that** the container receivers (4a.1, 4a.2) for the track change between the first and the at least one other track (6, 7) and / or for the track change between two other tracks (7, 7.1) are moved relative to the vertical machine axis or to the rotor (3) in such a way that this relative movement has at least one movement component running radially to the machine axis.

13. Method according to claim 12, **characterised in that** the container receivers (4a.1, 4a.2) for the track change are swivelled in each case around an axis (TA) radially offset from the receiver and oriented parallel or approximately parallel to the vertical machine axis.

14. Method according to any one of claims 7 - 13, **characterised in that** the container receivers (4a.1, 4a.2) during the rotation of the rotor (3) around the vertical machine axis are moved at least once around a rotation or swivel axis (TA) oriented parallel or approximately parallel to the vertical machine axis and radially offset relative to the container receivers (4a.1, 4a.2) from at least a first position into a second position at a distance from the vertical machine axis, said distance being radially different relative to the first position, and that furthermore in each case another container receiver moves into the first position.

15. Method according to any one of claims 7 - 14, **characterised in that** during the rinser treatment of each container (2, 2a), a multiple track change occurs.

16. Method according to any one of the preceding claims, **characterised in that** the first track (6) has the greater distance from the vertical machine axis.

17. Method according to any one of the preceding claims, **characterised in that** the containers (2, 2a) are moved on two tracks (6, 7) during the filling or the rinser treatment.

18. Method according to any one of the preceding claims, **characterised in that** the handled containers (2, 2a) are removed at the at least one container outlet (10) on the first track (6).

19. Method according to any one of the preceding claims, **characterised in that** the containers (2, 2a) on the first track (6) are moved over an angle area of less than 360° and on the at least one further track (7, 7.1) over an angle area of 360° or close to 360°.

20. Method according to any one of the preceding claims, **characterised in that** the containers (2, 2a) are supplied to the at least one container feed (9) as a single-track container flow and are removed on the at least one container outlet (10) as a single-track container flow.

21. Method according to any one of the preceding claims, **characterised in that** the containers (2) are arranged upright on the container receivers (4.1, 4.2; 4b.1 - 4b.4; 4c.1 - 4c.3) or are held suspended on the container receivers (4a.1, 4a.2).

22. Method according to any one of the preceding claims, **characterised in that** in each case at least two container receivers (4.1, 4.2; 4a.1, 4a.2; 4b.1 - 4b.4; 4c.1 - 4c.3) form one container receiver unit (4, 4a, 4b, 4c), in which the container receivers are arranged at the same radial distance from a receiver axis (TA), and that each container receiver (4, 4a, 4b, 4c) is rotated or swivelled around this receiver axis (TA) for the track change.

23. Method according to any one of the preceding claims, **characterised in that** in each case at least two or three container receivers (4.1, 4.2; 4a.1, 4a.2; 4b.1 - 4b.4; 4c.1 - 4c.3) form one container receiver unit (4, 4a, 4b, 4c), in which the container receivers are arranged at the same radial distance from a receiver axis (TA), and that each container receiver (4, 4a, 4b, 4c) is rotated or swivelled around this receiver axis (TA) for the track change.

24. Container handling machine in the form of a filling machine of a rotary type for filling containers (2) with a liquid filling material, with at least one rotor (3) which is driven to rotate about a vertical machine axis, said rotor having container receivers (4.1, 4.2; 4b.1 - 4b.4; 4c.1 - 4c.3), wherein the containers (2) to be filled on at least one container feed (9) are transferred one after the other onto the container receivers (4.1, 4.2; 4b.1 - 4b.4; 4c.1 - 4c.3) moved past, said receivers being on a first track (6) there enclosing the vertical machine axis, and after filling, the containers (2) are removed from the container receivers (4.1, 4.2; 4b.1 - 4b.4; 4c.1 - 4c.3) at at least one container outlet, wherein, for a track change, said container receivers can be moved relative to the vertical machine axis or the rotor (3) in such a way that the containers (2) arranged on the container receivers (4.1, 4.2; 4b.1 - 4b.4; 4c.1 - 4c.3) are moved with the rotating rotor (3) by an at least single track change in each case at least on a partial length at least of a second track (7, 7.1) enclosing the vertical machine axis, **characterised in that** the filling machine, to achieve a high performance with a reduced diameter of the rotor (3), is designed to fill the containers (2) also on the other track (7, 7.1) after the track change.

25. Container handling machine according to claim 24, **characterised in that** in each case at least two container receivers (4.1, 4.2; 4b.1 - 4b.4; 4c.1 - 4c.3) form one container receiver unit (4, 4a, 4b, 4c), in which the container receivers are arranged at the same radial distance from a receiver axis (TA), that each container receiver unit (4, 4b, 4c) can be rotated or swivelled around its receiver axis for the track change, and that the filling elements (13) provided for filling the containers (2) are made to swivel with the particular container receiver unit (4, 4b, 4c).

26. Container handling machine according to claim 24 or 25, **characterised in that** the container receivers (4.1, 4.2; 4a.1, 4a.2; 4b.1 - 4b.4; 4c.1 - 4c.3) can be controlled such that the containers (2, 2a) are moved on two or three tracks (6, 7) during the handling.

27. Container handling machine according to any one of claims 24 - 26, **characterised in that** the containers (2, 2a) are supplied to the at least one container feed (9) as a single-track container flow and / or are removed on the at least one container outlet (10) as a single-track container flow.

28. Container handling machine according to any one of claims 24 - 27, **characterised in that** the container receivers (4.1, 4.2; 4b.1 - 4b.4; 4c.1 - 4c.3) are made for a standing or a suspended arrangement of the containers (2).

29. Container handling machine according to any one of claims 24 - 28, **characterised in that** in each case at least three or four container receivers (4b.1 - 4b.4; 4c.1 - 4c.3) form a container receiver unit (4b, 4c), in which the container receivers are arranged at the same radial distance from a receiver axis (TA), and that each container receiver (4b, 4c) can be rotated or swivelled around this receiver axis (TA) for the track change.

30. Container handling machine of a rotary type for the handling of containers (2a), with at least one rotor (3) which is driven to rotate about a vertical machine axis with container receivers (4a.1, 4a.2; 4b.1 - 4b.4; 4c.1 - 4c.3), wherein the containers (2a) to be handled on at least one container feed (9) are transferred one after the other onto the container receivers (4a.1, 4a.2; 4b.1 - 4b.4; 4c.1 - 4c.3) moved past, on a first track (6) there enclosing the vertical machine axis, and after handling, the containers (2) are removed from the container receivers (4.1, 4.2; 4b.1 - 4b.4; 4c.1 - 4c.3) at at least one container outlet, wherein move said container receivers can be moved relative to the vertical machine axis or the rotor (3) in such a way that the containers (2a) arranged on the container receivers (4.1, 4.2; 4b.1 - 4b.4; 4c.1 - 4c.3) are moved during the handling with the rotating rotor (3) by an at least single track change in each case at least on a partial length at least of one other track (7, 7.1) enclosing the vertical machine axis, **characterised in that** the container handling machine is made as a rinser and / or steriliser for cleaning and / or sterilising the containers (2) both on the first track (S) and also on the at least one other track (7, 7.1).

31. Container handling machine according to claim 30, **characterised by** the design of the machine in such a way that on the first and the at least one other track (6, 7, 7.1) a handling of the containers (2a) takes place with various liquid cleaning media, for example on the first track (6) or on a partial stretch of the first track (6), a pre-rinsing with water, preferably with re-used water, after a track change on another subsequent track (7) a treatment with another treatment medium, preferably with a treatment medium containing water and at least one cleaning agent, and after a further track change, a subsequent spraying to remove the treatment medium or residues of this treatment medium, for example with fresh water, wherein this subsequent spraying takes place for example on the first track (6).

32. Container handling machine according to claim 30 or 31, **characterised by** a design of the machine in such a way that the containers (2a) of the at least one container feed (9) are supplied in an upright position with the particular container opening at the top and on the container feed (9) before the transfer or after the transfer onto a container receiver (4a.1, 4a.2) are brought into a position departing from the upright position, for example into an overhead position, and that the containers (2a) are returned to their upright position after the handling on the container receivers (4a.1, 4a.2) or at the at least one container outlet (10).

33. Container handling machine according to any one of claims 30 - 32, **characterised in that** the first track (8) has the greater distance from the vertical machine axis.

34. Container handling machine according to any one of claims 30 - 33, **characterised in that** the container receivers (4a.1, 4a.2) can be controlled such that the containers (2a) are moved on two or at least three tracks (8, 7) during the handling.

35. Container handling machine according to any one of claims 30 - 34, **characterised in that** the container receivers (4a.1, 4a.2) can be controlled in such a way that the handled containers (2, 2a) are removed at the at least one container outlet (10) on the first track (6).

36. Container handling machine according to any one of claims 30 - 35, **characterised in that** the containers (2, 2a) are moved, during the handling, over an angle area of the rotating rotor (3) of clearly more than 360°.

37. Container handling machine according to claim 36, **characterised in that**, during the handling on the first track (6), the containers (2, 2a) are moved over an angle area of less than 360° and on the at least one further track (7, 7.1) over an angle area of 360° or close to 360°.

38. Container handling machine according to any one of claims 30 - 37, **characterised in that** the containers (2, 2a) are supplied to the at least one container feed (9) as a single-track container flow and / or are removed at the at least one container outlet (10) as a single-track container flow.

39. Container handling machine according to any one of claims 30 - 38, **characterised in that** the container receivers (4a.1, 4a.2) during the rotation of the rotor (3) around the vertical machine axis are moved at least once around a rotation or swivel axis (TA) oriented parallel or approximately parallel to the vertical machine axis and radially offset relative to the container receiver (4a.1, 4a.2) from at least a first position into a second position at a distance from the vertical machine axis, said distance being radially different relative to the first position, and that furthermore in each case another container receiver moves into the first position.

40. Container handling machine according to any one of claims 30 - 39, **characterised in that** the container feeds (4a.1, 4a.2) can be moved for the track change in such a way that each container receiver (4a.1, 4a.2) moved out of the first track (6) is replaced by another container receiver.

41. Container handling machine according to any one of claims 30 - 40, **characterised in that** the container receivers (4a.1, 4a.2) for the track change between the first and the at least one other track (6, 7) and / or for the track change between two further tracks (7, 7.1) are moved relative to the vertical machine axis or to the rotor (3) in such a way that this relative movement has at least one movement component running radially to the machine axis.

42. Container handling machine according to claim 41, **characterised in that** the container receivers (4a.1, 4a.2) for the track change are swivelled in each case around an axis (TA) radially offset from the receiver and oriented parallel or approximately parallel to the vertical machine axis.

43. Container handling machine according to any one of claims 30 - 42, **characterised in that** the container receivers (4a.1, 4a.2) are made for a suspended arrangement of the containers (2a).

44. Container handling machine according to any one of claims 30 - 43, **characterised in that** in each case two or at least three or four container receivers (4a.1, 4a.2) form a container receiver unit (4a), in which the container receivers are arranged at the same radial distance from a receiver axis (TA), and that each container receiver (4a) can be rotated or swivelled around this receiver axis (TA) for the track change.

## Revendications

1. Procédé permettant le remplissage de récipients (2) moyennant l'utilisation d'une machine de remplissage (1) de type rotatif comportant au moins un rotor (3) pouvant être entraîné en rotation autour d'un axe vertical de la machine, les récipients (2) étant transférés au niveau d'au moins un dispositif de remise des récipients (9) les uns après les autres vers des logements pour récipients (4.1, 4.2 ; 4b.1 - 4b.4 ; 4c.1 - 4c.3) sur le rotor (3), et étant déplacés avec les logements pour récipients (4.1, 4.2 ; 4b.1 - 4b.4 ; 4c.1 - 4c.3), en vue de leur remplissage, sur au moins une longueur partielle d'une première voie (6) entourant l'axe vertical de la machine, et ensuite, moyennant un changement de voie effectué au moins une fois, avec les logements pour récipients (4.1, 4.2 ; 4b.1 - 4b.4 ; 4c.1 - 4c.3) au moins sur une longueur partielle d'une deuxième voie (7, 7.1) entourant l'axe vertical de la machine, **caractérisé en ce que** pour obtenir un rendement élevé de la machine de remplissage (1) tout en diminuant le diamètre du rotor (3), le remplissage du récipient (2) respectif s'effectue également sur la voie (7, 7.1) supplémentaire après le changement de voie.

2. Procédé selon la revendication 1, **caractérisé en ce que** pendant le remplissage, le changement de voie du récipient (2) respectif s'effectue dans au moins une position angulaire (12) prédéfinie du mouvement de rotation du rotor (3) ou plusieurs fois.

3. Procédé selon la revendication 1 ou 2, **caractérisé en ce que** ledit au moins un changement de voie s'effectue par le pivotement des logements pour récipients (4.1, 4.2 ; 4b.1 - 4b.4 ; 4c.1 - 4c.3) autour d'un axe (TA) parallèle à l'axe de la machine, et **en ce que** des éléments de remplissage (13), utilisés pour le remplissage des récipients (2), pivotent conjointement avec les logements pour récipients (4.1, 4.2 ; 4b.1 - 4b.4 ; 4c.1 - 4c.3) au moment du changement de voie.

4. Procédé selon l'une quelconque des revendications précédentes, **caractérisé en ce que** le remplissage est interrompu pendant au moins un changement de voie et reprend après le changement de voie.

5. Procédé selon la revendication 4, **caractérisé en ce que** les quantités de produit de remplissage, introduites dans le récipient (2) respectif avant ledit au moins un changement de voie et après ledit au moins un changement de voie, sont additionnées à une valeur réelle et **en ce que** par la comparaison à une valeur de consigne est calculée une quantité restante de produit de remplissage qui est alors introduite dans le récipient (2) respectif au cours d'une phase de remplissage de correction.

6. Procédé selon la revendication 5, **caractérisé en ce que** la phase de remplissage de correction est mise en oeuvre après un changement de voie supplémentaire, de préférence après un changement de voie vers la première voie (6).

7. Procédé permettant le traitement de récipients (2a) moyennant l'utilisation d'une machine de traitement (1) de type rotatif comportant au moins un rotor (3) pouvant être entraîné en rotation autour d'un axe vertical de la machine, le traitement des récipients (2a) étant effectué sur le rotor (3) et, à cet effet, les récipients (2a) étant transférés au niveau d'au moins un dispositif de remise des récipients (9) les uns après les autres vers des logements pour récipients (4a.1, 4a.2) sur le rotor (3), et étant déplacés avec ceux-ci pendant le traitement sur au moins une longueur partielle d'une première voie entourant l'axe vertical de la machine, et, moyennant un changement de voie effectué au moins une fois, au moins sur une longueur partielle d'une deuxième voie (7, 7.1) entourant l'axe vertical de la machine, et les récipients traités étant retirés du rotor (3) au niveau d'au moins un dispositif d'évacuation des récipients (10), **caractérisé en ce que** les récipients, en vue de leur nettoyage et/ou stérilisation, sont soumis à un traitement de lavage et/ou de stérilisation sur la première voie (6), ainsi que sur ladite au moins une voie (7, 7.1) supplémentaire.

8. Procédé selon la revendication 7, **caractérisé en ce que** sur la première voie et ladite au moins une voie (6, 7, 7.1) supplémentaire, est effectué un traitement des récipients (2a) avec différents produits de nettoyage liquides, par exemple un prélavage à l'eau, de préférence avec de l'eau réutilisée, est effectué sur la première voie (6) ou sur un tronçon de la première voie (6), un traitement avec un autre produit de traitement, de préférence avec de l'eau et au moins un produit de traitement contenant un produit de nettoyage, est effectué sur une autre voie (7) consécutive et, après un autre changement de voie, est effectuée une aspersion finale, par exemple à l'eau claire, pour éliminer le produit de traitement ou des résidus de ce produit de traitement, ladite aspersion finale étant effectuée par exemple sur la première voie (6).

9. Procédé selon la revendication 7 ou 8, **caractérisé en ce que** les récipients (2a) sont acheminés vers ledit au moins un dispositif de remise des récipients (9) dans une position verticale avec l'ouverture du récipient en haut, puis, dans le dispositif de remise des récipients (9) avant le transfert ou après le transfert dans un logement pour récipient (4a.1, 4a.2), sont amenés dans une position différente de la position verticale, par exemple dans une position tête en bas, et **en ce que** les récipients (2a) après le traitement sont remis dans leur position verticale dans les logements pour récipient (4a.1, 4a.2) ou dans ledit au moins un dispositif d'évacuation des récipients (10).

10. Procédé selon l'une quelconque des revendications 7 à 9, **caractérisé en ce que** le changement de voie, effectué au moins une fois, est effectué moyennant un mouvement des logements pour récipient (4a.1, 4a.2) avec les récipients (2a) par rapport à l'axe de la machine ou par rapport au rotor (3).

11. Procédé selon l'une quelconque des revendications 7 à 10, **caractérisé en ce que** le mouvement des logements pour récipient (4a.1, 4a.2) lors du changement de voie est effectué de telle sorte que chaque logement pour récipient (4a.1, 4a.2) déplacé hors de la première voie (6) est remplacé par un autre logement pour récipient.

12. Procédé selon l'une quelconque des revendications 7 à 11, **caractérisé en ce que**, en vue du changement de voie entre la première voie et ladite au moins une voie (6, 7) supplémentaire et/ou en vue du changement de voie entre deux autres voies (7, 7.1), les logements pour récipient (4a.1, 4a.2) sont déplacés par rapport à l'axe vertical de la machine ou par rapport au rotor (3), de telle sorte que ce mouvement relatif comporte au moins une composante de déplacement orientée radialement à l'axe de la machine.

13. Procédé selon la revendication 12, **caractérisé en ce que**, en vue du changement de voie, les logements pour récipient (4a.1, 4a.2) pivotent chacun autour d'un axe (TA) décalé radialement par rapport au logement et orienté parallèlement ou sensiblement parallèlement à l'axe vertical de la machine.

14. Procédé selon l'une quelconque des revendications 7 à 13, **caractérisé en ce que**, pendant la rotation du rotor (3) autour de l'axe vertical de la machine, les logements pour récipient (4a.1, 4a.2) sont déplacés au moins une fois autour d'un axe de rotation ou axe de pivotement (TA) orienté parallèlement ou sensiblement parallèlement à l'axe vertical de la machine et décalé radialement par rapport aux logements pour récipient (4a.1, 4a.2), à partir d'une première position vers une deuxième position avec une distance radiale par rapport à l'axe vertical de la machine, différente de celle dans la première position, et **en ce que**, à cette occasion, respectivement un autre logement pour récipient parvient dans la première position.

15. Procédé selon l'une quelconque des revendications 7 à 14, **caractérisé en ce que** plusieurs changements de voie s'effectuent pendant le traitement de lavage de chaque récipient (2, 2a).

16. Procédé selon l'une quelconque des revendications précédentes, **caractérisé en ce que** la première voie (6) est située à la plus grande distance de l'axe vertical de la machine.

17. Procédé selon l'une quelconque des revendications précédentes, **caractérisé en ce que** les récipients (2, 2a) sont déplacés sur deux voies (6, 7) pendant le remplissage ou pendant le traitement de nettoyage.

18. Procédé selon l'une quelconque des revendications précédentes, **caractérisé en ce que** les récipients (2, 2a) traités sont retirés au niveau dudit au moins un dispositif d'évacuation des récipients (10) sur la première voie (6).

19. Procédé selon l'une quelconque des revendications précédentes, **caractérisé en ce que** les récipients (2, 2a) sur la première voie (6) sont déplacés sur une plage angulaire inférieure à 360° et sur ladite au moins une voie (7, 7.1) supplémentaire sont déplacés sur une plage angulaire de 360° ou sensiblement de 360°.

20. Procédé selon l'une quelconque des revendications précédentes, **caractérisé en ce que** les récipients (2, 2a) sont acheminés sous forme de flux en une seule voie vers ledit au moins un dispositif de remise des récipients (9) et au niveau dudit au moins dispositif d'évacuation des récipients (10) sont retirés sous forme de flux en une seule voie.

21. Procédé selon l'une quelconque des revendications précédentes, **caractérisé en ce que** les récipients (2) sont disposés verticalement sur les logements pour récipients (4.1, 4.2 ; 4b.1 - 4b.4 ; 4c.1 - 4c.3) ou sont maintenus par suspension sur les logements pour récipient (4a.1, 4a.2).

22. Procédé selon l'une quelconque des revendications précédentes, **caractérisé en ce que** respectivement au moins deux logements pour récipients (4.1, 4.2 ; 4a.1, 4a.2 ; 4b.1 - 4b.4 ; 4c.1 - 4c.3) forment une unité de logements (4, 4a, 4b, 4c), dans laquelle les logements pour récipients sont disposés à la même distance radiale d'un axe de réception (TA), et **en ce que** chaque logement pour récipient (4, 4a, 4b, 4c) est amené à tourner ou pivoter autour de cet axe de réception (TA) en vue du changement de voie.

23. Procédé selon l'une quelconque des revendications précédentes, **caractérisé en ce que** respectivement au moins deux ou trois logements pour récipients (4.1, 4.2 ; 4a.1, 4a.2 ; 4b.1 - 4b.4 ; 4c.1 - 4c.3) forment une unité de logements (4, 4a, 4b, 4c), dans laquelle les logements pour récipients sont disposés à la même distance radiale d'un axe de réception (TA), et **en ce que** chaque logement pour récipient (4, 4a, 4b, 4c) est amené à tourner ou pivoter autour de cet axe de réception (TA) en vue du changement de voie.

24. Machine de traitement de récipients sous la forme d'une machine de remplissage de type rotatif permettant de remplir des récipients (2) avec un produit de remplissage liquide, comportant au moins un rotor (3) pouvant être entraîné en rotation autour d'un axe vertical de la machine et muni de logements pour récipients (4.1, 4.2 ; 4b.1 - 4b.4 ; 4c.1 - 4c.3), lesdits récipients (2) à remplir étant transférés au niveau d'au moins un dispositif de remise des récipients (9) les uns après les autres vers les logements pour récipients (4.1, 4.2 ; 4b.1 - 4b.4 ; 4c.1 - 4c.3) déplacés à cet emplacement le long d'une première voie (6) entourant l'axe vertical de la machine, et, après le remplissage, les récipients (2) étant retirés des logements pour récipients (4.1, 4.2 ; 4b.1 - 4b.4 ; 4c.1 - 4c.3) au niveau d'au moins un dispositif d'évacuation des récipients, lesquels logements, en vue d'un changement de voie, peuvent être déplacés par rapport à l'axe vertical de la machine ou par rapport au rotor (3), de telle sorte que les récipients (2) disposés sur les logements pour récipients (4.1, 4.2 ; 4b.1 - 4b.4 ; 4c.1 - 4c.3) sont déplacés avec le rotor (3) en rotation, moyennant un changement de voie effectué au moins une fois, respectivement au moins sur une longueur partielle d'au moins une deuxième voie (7, 7.1) entourant l'axe vertical de la machine, **caractérisé en ce que** pour obtenir un rendement élevé tout en diminuant le diamètre du rotor (3), la machine de remplissage est réalisée pour pouvoir remplir les récipients (2) également sur la voie (7, 7.1) supplémentaire après le changement de voie.

25. Machine de traitement de récipients selon la revendication 24, **caractérisée en ce que** respectivement au moins deux logements pour récipients (4.1, 4.2 ; 4b.1 - 4b.4 ; 4c.1 - 4c.3) forment une unité de logements (4, 4b, 4c), dans laquelle les logements pour récipients sont disposés à la même distance radiale d'un axe de réception (TA), **en ce que** chaque unité de logements (4, 4b, 4c) est apte à tourner ou pivoter autour de son axe de réception en vue du changement de voie, et **en ce que** des éléments de remplissage (13) prévus pour le remplissage des récipients (2) sont réalisés de manière à pouvoir pivoter conjointement avec l'unité de logements (4, 4b, 4c) respective.

26. Machine de traitement de récipients selon la revendication 24 ou 25, **caractérisée en ce que** les logements pour récipients (4.1, 4.2 ; 4a.1, 4a.2 ; 4b.1 - 4b.4 ; 4c.1 - 4c.3) peuvent être commandés de telle sorte que les récipients (2, 2a) sont déplacés pendant le traitement sur deux ou trois voies (6, 7).

27. Machine de traitement de récipients selon l'une quelconque des revendications 24 à 26, **caractérisée en ce que** les récipients (2, 2a) sont acheminés sous forme de flux en une seule voie vers ledit au moins un dispositif de remise des récipients (9) et/ou sont retirés sous forme de flux en une seule voie au niveau dudit au moins dispositif d'évacuation des récipients (10).

28. Machine de traitement de récipients selon l'une quelconque des revendications 24 à 27, **caractérisée en ce que** les logements pour récipients (4.1, 4.2 ; 4b.1 - 4b.4 ; 4c.1 - 4c.3) sont réalisés pour un agencement vertical ou suspendu des récipients (2).

29. Machine de traitement de récipients selon l'une quelconque des revendications 24 à 28, **caractérisée en ce que** respectivement au moins trois ou quatre logements pour récipients (4b.1 - 4b.4 ; 4c.1 - 4c.3) forment une unité de logements (4b, 4c), dans laquelle les logements pour récipients sont disposés à la même distance radiale d'un axe de réception (TA), et **en ce que** chaque logement pour récipient (4b, 4c) est apte à tourner ou pivoter autour de cet axe de réception (TA) en vue du changement de voie.

30. Machine de traitement de récipients de type rotatif permettant le traitement de récipients (2a), comportant au moins un rotor (3) pouvant être entraîné en rotation autour d'un axe vertical de la machine et muni de logements pour récipients (4a.1, 4a.2 ; 4b.1 - 4b.4 ; 4c.1 - 4c.3), lesdits récipients (2a) à traiter étant transférés au niveau d'au moins un dispositif de remise des récipients (9) les uns après les autres vers les logements pour récipients (4a.1, 4a.2 ; 4b.1 - 4b.4 ; 4c.1 - 4c.3), déplacés à cet emplacement le long d'une première voie (6) entourant l'axe vertical de la machine, et, après le traitement, les récipients (2a) étant retirés des logements pour récipients (4a.1, 4a.2 ; 4b.1 - 4b.4 ; 4c.1 - 4c.3) au niveau d'au moins un dispositif d'évacuation des récipients, lesquels logements, en vue d'un changement de voie, peuvent être déplacés par rapport à l'axe vertical de la machine ou par rapport au rotor (3), de telle sorte que les récipients (2a) disposés sur les logements pour récipients (4a.1, 4a.2 ; 4b.1 - 4b.4 ; 4c.1 - 4c.3) sont déplacés pendant le traitement avec le rotor (3) en rotation, moyennant un changement de voie effectué au moins une fois, respectivement au moins sur une longueur partielle d'au moins une voie (7, 7.1) supplémentaire entourant l'axe vertical de la machine, **caractérisé en ce que** la machine de traitement des récipients est configurée sous forme de nettoyeur et/ou sous forme de stérilisateur pour le nettoyage et/ou la stérilisation des récipients (2) tant sur la première voie (6) que sur ladite au moins une voie (7, 7.1) supplémentaire.

31. Machine de traitement de récipients selon la revendication 30, **caractérisée par** une configuration de la machine de telle sorte que sur la première voie et ladite au moins une voie (6, 7, 7.1) supplémentaire est effectué un traitement des récipients (2a) avec différents produits de nettoyage liquides, par exemple un prélavage à l'eau, de préférence avec de l'eau réutilisée, est effectué sur la première voie (6) ou sur un tronçon de la première voie (6), un traitement avec un autre produit de traitement, de préférence avec de l'eau et au moins un produit de traitement contenant un produit de nettoyage, est effectué sur une autre voie (7) consécutive et, après un autre changement de voie, est effectuée une aspersion finale, par exemple à l'eau claire, pour éliminer le produit de traitement ou des résidus de ce produit de traitement, ladite aspersion finale étant effectuée par exemple sur la première voie (6).

32. Machine de traitement de récipients selon la revendication 30 ou 31, **caractérisée par** une configuration de la machine de telle sorte que les récipients (2a) sont acheminés vers ledit au moins un dispositif de remise des récipients (9) dans une position verticale avec l'ouverture de récipient en haut, puis, dans le dispositif de remise des récipients (9) avant le transfert ou après le transfert dans un logement pour récipient (4a.1, 4a.2), sont amenés dans une position différente de la position verticale, par exemple dans une position tête en bas, et en ce que les récipients (2a) après le traitement sont remis dans leur position verticale dans les logements pour récipient (4a.1, 4a.2) ou dans ledit au moins un dispositif d'évacuation des récipients (10).

33. Machine de traitement de récipients selon l'une quelconque des revendications 30 à 32, **caractérisée en ce que** la première voie (6) est située à la plus grande distance de l'axe vertical de la machine.

34. Machine de traitement de récipients selon l'une quelconque des revendications 30 à 33, **caractérisée en ce que** les logements pour récipients (4a.1, 4a.2) peuvent être commandés de telle sorte que les récipients (2a) sont déplacés pendant le traitement sur au moins trois voies (6, 7).

35. Machine de traitement de récipients selon l'une quelconque des revendications 30 à 34, **caractérisée en ce que** les logements pour récipients (4a.1, 4a.2) peuvent être commandés de telle sorte que les récipients (2, 2a) traités peuvent être retirés dudit au moins un dispositif d'évacuation des récipients (10) sur la première voie (6).

36. Machine de traitement de récipients selon l'une quelconque des revendications 30 à 35, **caractérisée en ce que** les récipients (2, 2a) sont déplacés pendant le traitement sur une plage angulaire du rotor (3) en rotation nettement supérieure à 360°.

37. Machine de traitement de récipients selon la revendication 36, **caractérisée en ce que** pendant le traitement les récipients (2, 2a) sont déplacés sur la première voie (6) sur une plage angulaire inférieure à 360° et sont déplacés sur ladite au moins une voie (7, 7.1) supplémentaire sur une plage angulaire de 360° ou sensiblement 360°.

38. Machine de traitement de récipients selon l'une quelconque des revendications 30 à 37, **caractérisée en ce que** les récipients (2, 2a) sont acheminés sous forme de flux en une seule voie vers ledit au moins un dispositif de remise des récipients (9) et/ou sont retirés sous forme de flux en une seule voie au niveau dudit au moins dispositif d'évacuation des récipients (10).

39. Machine de traitement de récipients selon l'une quelconque des revendications 30 à 38, **caractérisée en ce que** pendant la rotation du rotor (3) autour de l'axe vertical de la machine, les logements pour récipient (4a.1, 4a.2) peuvent être déplacés au moins une fois autour d'un axe de rotation ou axe de pivotement (TA) orienté parallèlement ou sensiblement parallèlement à l'axe vertical de la machine et décalé radialement par rapport aux logements pour récipient (4a.1, 4a.2), à partir d'au moins une première position vers une deuxième position avec une distance radiale par rapport à l'axe vertical de la machine, différente de celle dans la première position, et **en ce que**, à cette occasion, respectivement un autre logement pour récipient parvient dans la première position.

40. Machine de traitement de récipients selon l'une quelconque des revendications 30 à 39, **caractérisée en ce que**, en vue du changement de voie, les logements pour récipient (4a.1, 4a.2) peuvent être déplacés de telle sorte que chaque logement pour récipient (4a.1, 4a.2) déplacé hors de la première voie (6) est remplacé par un autre logement pour récipient.

41. Machine de traitement de récipients selon l'une quelconque des revendications 30 à 40, **caractérisée en ce que**, pour le changement de voie entre la première voie et ladite au moins une voie (6, 7) supplémentaire et/ou pour le changement de voie entre deux autres voies (7, 7.1), les logements pour récipient (4a.1, 4a.2) peuvent être déplacés par rapport à l'axe vertical de la machine ou par rapport au rotor (3), de telle sorte que ce mouvement relatif comporte au moins une composante de déplacement orientée radialement à l'axe de la machine.

42. Machine de traitement de récipients selon la revendication 41, **caractérisée en ce que**, en vue du changement de voie, les logements pour récipient (4a.1, 4a.2) peuvent pivoter chacun autour d'un axe (TA) décalé radialement par rapport au logement et orienté parallèlement ou sensiblement parallèlement à l'axe vertical de la machine.

43. Machine de traitement de récipients selon l'une quelconque des revendications 30 à 42, **caractérisée en ce que** les logements pour récipients (4a.1, 4a.2) sont réalisés pour un agencement suspendu des récipients (2a).

44. Machine de traitement de récipients selon l'une quelconque des revendications 30 à 43, **caractérisée en ce que** respectivement au moins deux ou au moins trois ou quatre logements pour récipients (4a.1, 4a.2) forment une unité de logements (4a), dans laquelle les logements pour récipients sont disposés à la même distance radiale d'un axe de réception (TA), et **en ce que**, pour le changement de voie, chaque logement pour récipient (4a) est apte à tourner ou pivoter autour de cet axe de réception (TA).
